# EUROPEAN PATENT APPLICATION

(11) **EP 4 265 359 A1**
(43) Date of publication of application: **25.10.2023**
(21) Application number: 21906455.7
(22) Date of filing: 08.12.2021
(51) Int. Cl.: B23B 31/107, B23B 31/30, B23Q 3/12

(54) **MAIN-SHAFT AND HOLDER COMBINATION, HOLDER, AND MACHINE TOOL**

(30) Priority: 15.12.2020 JP 2020207413
(71) Applicant: Kanematsu, Minoru, Okazaki-shi Aichi, 444-0059 (JP)
(72) Inventor: Kanematsu, Minoru, Okazaki-shi Aichi, 444-0059 (JP)
(74) Representative: Cabinet Beau de Loménie
(86) International application number: PCT/JP2021/045056
(87) International publication number: WO 2022/131092

(57) **Abstract**

[Object] To provide a main-shaft and holder combination, a holder, and a machine tool which prevent a hydraulic fluid from leaking when the holder is detached from the main shaft, in a configuration for feeding the hydraulic fluid from the main shaft to the holder.

[Solution Means] A main shaft fluid passage A30 is provided at a center of a spindle 25 and a main shaft check valve A11 is attached, and a holder fluid passage A32 is provided at a center of a holder 22 and a holder check valve A17 is attached. At a main shaft cylinder 23 position away from the spindle 25, a main shaft fluid passage B11 and a holder fluid passage B48 are provided, and a main shaft check valve B39 and a holder check valve B40 are attached. When the holder 25 is attached to the spindle 25, the main shaft check valve A11 (B39) and the holder check valve A17 (B40) are connected.

## Description

### Technical Field

The present invention relates to a main-shaft and holder combination to be used in a machine tool such as a machining center, a combined machining center, and a combined lathe, a holder, and a machine tool equipped with these main shaft and holder.

### Background Art

There is a conventional technology in which a holder to be automatically attached to a main shaft of a machine tool is provided with a cylinder, and by feeding hydraulic oil to the cylinder from a fluid passage of the main shaft through a fluid passage of the holder, a grasping mechanism is activated to enable a variety of workpieces or the like to be automatically attached to and detached from the main shaft (refer to Patent Literature 1). This technology enabled a variety of machining and multi-process machining with a single machine tool.

In addition, Patent Literature 2 shows a technology in which a chuck having holding claws integrated with a shank portion for holding a workpiece is provided, and the chuck is opened and closed by using a pressure of coolant supplied from machining equipment through the shank portion. According to this technology, the chuck is activated by using coolant for cooling, and accordingly, a chuck unit that does not need a working fluid such as compressed air or hydraulic oil is provided.

### Citation List

### Patent Literature

Patent Literature 1: Japanese Patent Publication No. 5186049
Patent Literature 2: Japanese Unexamined Patent Application Publication No. 2020-66114

### Summary of Invention

### Technical Problem

The inventions disclosed in the Patent Literature listed above have a problem in which no check valve is provided between the fluid passage of the main shaft side and the fluid passage of the holder side, and when the holder or the chuck unit is detached from the main shaft, the hydraulic fluid leaks from the fluid passage of the main shaft side, contaminates the inside of the equipment and adheres to a tapered inner surface of a spindle of the main shaft. When the hydraulic fluid adheres to the tapered inner surface of the spindle, dust easily adheres to the tapered inner surface of the spindle, and dust adhering to the tapered inner surface adversely affects the accuracy of grasping of the holder or the chuck unit by the spindle.

Further, there is a problem in which the hydraulic fluid leaking from the fluid passage of the holder side contaminates the inside of the equipment, the tool magazine, etc. There is also a problem in which when a hydraulic power unit is used and hydraulic oil is used as a hydraulic fluid, a leakage amount of the hydraulic oil from the fluid passage of the holder side due to one-time attachment and detachment is small, however, while the main shaft and the holder are frequently attached and detached, the amount of hydraulic oil in the hydraulic circuit gradually decreases, causing a situation where the hydraulic power unit does not normally work.

When a workpiece gripping base is installed in a machine tool, and a workpiece held by the workpiece gripping base is machined, it is difficult to install piping for supplying a hydraulic fluid to the cylinder of the workpiece gripping base in some cases . Even in a case where piping for supplying a hydraulic fluid can be installed, there are still problems in which the installed piping becomes an obstacle, and an arrangement change such as a change of the type of the workpiece gripping base or a change in position of the workpiece gripping base is troublesome.

In a configuration in which a hydraulic fluid is supplied to the cylinder of the holder from the fluid passage of the main shaft through the fluid passage of the holder to automatically attach and detach a variety of workpieces or the like to and from the main shaft, an object of the present invention is to prevent the hydraulic fluid from leaking from the fluid passages when the holder is detached from the main shaft. Another object of the present invention is to eliminate the need for the installation of piping for supplying a hydraulic fluid to a cylinder of a workpiece gripping base when the workpiece gripping base is installed in a machine tool and a workpiece held by the workpiece gripping base is machined.

### Solution to Problem

As a first means to realize the above-described objects, a structure is made in which, in a combination with a holder to be detachably joined to a spindle that is disposed on a main shaft of a machine tool and rotates with respect to the main shaft, a joining end portion of the holder is tapered to narrow toward a tip end so as to be joined to a fitting recess portion of the spindle that has an inner surface tapered to become wider toward a tip end, hydraulic oil is made to flow between a main shaft fluid passage (hereinafter, referred to as a main shaft fluid passage A) provided inside a pushing and pulling rod disposed coaxially with the spindle inside the spindle, and a holder fluid passage (hereinafter referred to as a holder fluid passage A) that is provided in the holder and capable of being communicated with the main shaft fluid passage A, a main shaft check valve (hereinafter, referred to as a main shaft check valve A) is provided in the main shaft fluid passage A, a holder check valve (hereinafter, referred to as a holder check valve A) is provided in the holder fluid passage A, and in a state where the holder is attached to the main shaft, a valve element of the main shaft check valve A and a valve element of the holder check valve A disposed to face each other are moved in directions away from each other along with the attachment of the holder, and along with the movements of the valve elements, the main shaft check valve A and the holder check valve A are opened to flow the hydraulic oil.

As described above, check valves are respectively attached to the fluid passage of the main shaft side and the fluid passage of the holder side, so that the hydraulic fluid can be supplied to the holder from the main shaft side through the fluid passages, and when the holder is detached from the main shaft, the hydraulic fluid can be prevented from leaking from the fluid passages. Specifically, the first means is a case where a hydraulic fluid supply unit is provided in which check valves are disposed to face each other between the main shaft fluid passage A provided in the spindle and the holder fluid passage A provided in the holder. The fitting recess portion of the spindle and the joining end portion of the holder are tapered so as to rub against each other, and are guided at the time of joining, so that when they are fitted, members are less likely to collide and the check valves A are smoothly connected.

The pushing and pulling rod rotates coaxially with and in synch with the spindle, and although the main shaft fluid passage A and the main shaft check valve A are provided inside the pushing and pulling rod, they are less likely to cause rotation unevenness because the pushing and pulling rod is disposed coaxially with the spindle. The main shaft check valve A is disposed inside the pushing and pulling rod, so that the main shaft check valve A is not exposed around the spindle, and the main shaft check valve A does not interfere with operation of a mechanism that operates for holder replacement, for example, an automatic tool changer (ATC).

It is preferable that the "holder" has a holder shank to be attached to and detached from a spindle of a main shaft of a machine tool. The type of the holder shank is preferably, for example, an HSK shank, a BT shank, an NC5 shank, a polygon shank, etc. It is preferable that, when the holder is attached to the main shaft, the main shaft check valve A provided in the main shaft and the holder check valve A are automatically connected.

The "check valve" has a valve element, and when the valve element moves, an internal passage through which a hydraulic fluid flows is formed. Specifically, the internal passage of the check valve is sealed in a state where the valve element, for example, a slide rod, a spherical body, a case or the like is biased by a biasing means such as a spring. When such a valve element is pushed and moved against the biasing means, the internal passage is opened. For example, a configuration is possible in which by pushing valve elements of two check valves disposed to face each other against each other, the valve elements such as slide rods or spherical bodies, etc., are retreated to open the valves. Preferably, a sealing member, for example, an O-ring, packing, or oil seal is attached to a portion where the check valves come into contact with each other, and accordingly, the hydraulic fluid can be further prevented from leaking. The main shaft check valve A and the holder check valve A may use the same type of valve elements, or different types of valve elements. The same definition of the check valve applies to check valves described below.

In the case where "a valve element of the main shaft check valve A and a valve element of the holder check valve A are moved in directions away from each other," it is preferable that, as the main shaft check valve A and the holder check valve A approach each other, tip ends of their valve elements come into contact with each other and push against each other, and accordingly, the valve elements are moved.

The "pushing and pulling rod" is a member that has the main shaft fluid passage A formed in a longitudinal direction and can advance and retreat, and has a function to draw the holder to the main shaft side by retreating after being engaged with the holder side. The pushing and pulling rod is advanced by a drive source, for example, a cylinder device or solenoid. Generally, since the drive source is on the main shaft side, after the pushing and pulling rod is pushed and moved down, the pushing and pulling rod is preferably moved up by a biasing means such as a spring.

The "hydraulic oil" is generally oil with higher viscosity than coolant, and can exert a stronger gripping force on a workpiece than coolant. The same definitions and explanations apply hereinafter.

As a second means, a structure is made in which, in a combination with a holder to be detachably joined to a spindle that is disposed on a main shaft of a machine tool and rotates with respect to the main shaft, a main shaft fluid passage (hereinafter, referred to as a main shaft fluid passage B) is provided at an arbitrary position not on the spindle of the main shaft, a holder fluid passage (hereinafter, referred to as a holder fluid passage B) to be communicated with the main shaft fluid passage B is provided on the holder side, a hydraulic fluid is made to flow between the main shaft fluid passage B and the holder fluid passage B, a main shaft check valve (hereinafter, referred to as a main shaft check valve B) is provided in the main shaft fluid passage B, a holder check valve (hereinafter, referred to as a holder check valve B) is provided in the holder fluid passage B, and in a state where the holder is attached to the main shaft, a valve element of the main shaft check valve B and a valve element of the holder check valve B disposed to face each other are moved in directions away from each other along with the attachment of the holder, and along with the movements of the valve elements, the main shaft check valve B and the holder check valve B are opened to flow the hydraulic fluid.

As described above, check valves are respectively attached to the fluid passage of the main shaft side and the fluid passage of the holder side, so that the hydraulic fluid can be supplied to the holder from the main shaft side through the fluid passages, and when the holder is detached from the main shaft, the hydraulic fluid can be prevented from leaking from the fluid passages. Specifically, the second means is a case where a hydraulic fluid supply unit is provided in which check valves are disposed to face each other between the main shaft fluid passage B provided at an arbitrary position not on the spindle and the holder fluid passage B provided in the holder.

The "arbitrary position not on the spindle of the main shaft" is preferably an arbitrary position on a member holding the rotary spindle, for example, a main shaft cylinder, or an arbitrary position on a member attached as an accessory to such a member holding the spindle. Since the holder is a member that rotates together with the spindle, when the holder is rotated, the main shaft fluid passage B and the holder fluid passage B need to be separated, and by providing the main shaft check valve B and the holder check valve B at the junction of these passages, the hydraulic fluid inside these passages does not leak when these passages are separated.

As a third means, a structure is made in which when the holder is detached from the main shaft, the valve element of the main shaft check valve A and the valve element of the holder check valve A are moved to approach each other, and along with the movements of the valve elements, the main shaft check valve A and the holder check valve A are closed so that the hydraulic fluid does not leak.

As a fourth means, a structure is made in which, when the holder is detached from the main shaft, the valve element of the main shaft check valve B and the valve element of the holder check valve B are moved to approach each other, and along with the movements of the valve elements, the main shaft check valve B and the holder check valve B are closed so that the hydraulic fluid does not leak.

When the holder is detached from the main shaft, the valve elements of the main shaft check valves A and B and the holder check valves A and B are automatically operated by, for example, biasing means to close the internal passages. According to the third and fourth means, the hydraulic fluid can be prevented from leaking when the holder is detached from the main shaft, so that runoff of the hydraulic fluid, contamination due to leakage of the hydraulic fluid, and loss of the hydraulic pressure applied to the holder side, etc., can be prevented.

As a fifth means, a structure is made in which, in a combination with a holder to be detachably joined to a spindle that is disposed on a main shaft of a machine tool and rotates with respect to the main shaft, a hydraulic fluid is made to flow between a main shaft fluid passage (hereinafter, referred to as a main shaft fluid passage A) provided in the spindle of the main shaft and a holder fluid passage (hereinafter, referred to as a holder fluid passage A) that is provided in the holder and capable of being communicated with the main shaft fluid passage A, a main shaft fluid passage (hereinafter, referred to as a main shaft fluid passage B) is provided at an arbitrary position not on the spindle of the main shaft, a holder fluid passage (hereinafter, referred to as a holder fluid passage B) to be communicated with the main shaft fluid passage B is provided on the holder side, the hydraulic fluid is made to flow between the main shaft fluid passage B and the holder fluid passage B, a main shaft check valve (hereinafter, referred to as a main shaft check valve B) is provided in the main shaft fluid passage B, a holder check valve (hereinafter, referred to as a holder check valve B) is provided in the holder fluid passage B, and in a state where the holder is attached to the main shaft, a valve element of the main shaft check valve B and a valve element of the holder check valve B disposed to face each other are moved in directions away from each other along with the attachment of the holder, and along with the movements of the valve elements, the main shaft check valve B and the holder check valve B are opened to flow the hydraulic fluid.

As described above, check valves are respectively attached to the fluid passage of the main shaft side and the fluid passage of the holder side, so that when the holder is detached from the main shaft, the hydraulic fluid can be prevented from leaking from the fluid passages. Specifically, the fifth means is a case where two hydraulic fluid supply units are provided by communicating the main shaft fluid passage A provided in the spindle and the holder fluid passage A provided in the holder with each other, and forming a passage in which check valves are disposed to face each other between the main shaft fluid passage B provided at an arbitrary position not on the spindle and the holder fluid passage B provided in the holder. Here, according to the fifth means, check valves are not necessarily provided in the main shaft fluid passage A and the holder fluid passage A, however, in a structure in which, for example, coolant is made to flow as the hydraulic fluid through these passages A, leakage does not pose a problem.

As a sixth means, a main shaft check valve (hereinafter, referred to as a main shaft check valve A) is provided in the main shaft fluid passage A, and a holder check valve A (hereinafter, referred to as a holder check valve A) is provided in the holder fluid passage A.

That is, this configuration is made so that the main shaft check valve A and the holder check valve A are respectively disposed in the main shaft fluid passage A and the holder fluid passage A of the fifth means. Accordingly, the hydraulic fluid supply units respectively include check valves. That is, the hydraulic fluid does not leak from the main shaft fluid passage A and the holder fluid passage A.

As a seventh means, a structure is made in which, when the holder is detached from the main shaft, a valve element of the main shaft check valve A and a valve element of the holder check valve A are moved to approach each other, and along with the movements of the valve elements, the main shaft check valve A and the holder check valve A are closed so that the hydraulic fluid does not leak.

As an eighth means, a structure is made in which, when the holder is detached from the main shaft, a valve element of the main shaft check valve B and a valve element of the holder check valve B are moved to approach each other, and along with the movements of the valve elements, the main shaft check valve B and the holder check valve B are closed so that the hydraulic fluid does not leak.

When the holder is detached from the main shaft, the valve elements of the main shaft check valves A and B and the holder check valves A and B are automatically operated by, for example, biasing means to close the internal passages. According to the seventh and eighth means, the hydraulic fluid can be prevented from leaking when the holder is detached from the main shaft, so that runoff of the hydraulic fluid, contamination due to leakage of the hydraulic fluid, and loss of the hydraulic pressure applied to the holder side, etc., can be prevented.

As a ninth means, a structure is made in which, in a state where the holder is attached to the main shaft, the main shaft check valve B is connected to the holder check valve B by advancing to the holder fluid passage B side, and is disconnected from the holder check valve B by retreating and allows the spindle to rotate.

By thus switching between a connected state and a disconnected state between the main shaft check valve B and the holder fluid passage B, the hydraulic fluid is supplied from the main shaft side to the holder grasped by the spindle to apply a hydraulic pressure for operating the mechanism on the holder side, and then, the holder is enabled to rotate together with the spindle.

The whole or part of the advancing main shaft check valve B may move toward the holder check valve B. For example, it is preferable that a mechanism to move the main shaft check valve B is provided on the main shaft side, and by this movement mechanism, the main shaft check valve B is advanced and retreated. For example, it is preferable that the main shaft check valve B is housed in a piston of a cylinder device, and by advancing the piston, the main shaft check valve B is advanced. A configuration in which the main shaft check valve B is attached to a solenoid device, a configuration using a combination of a motor and a ball screw, and a configuration using a linear motor, are also preferably used other than the cylinder device.

As a tenth means, one or a plurality of positioning recess portions are formed on the holder at positions on a circle concentric with an opening of the holder fluid passage B, and along with rotation of the holder with respect to the main shaft, the main shaft check valve B advances at a position corresponding to the positioning recess portion and engages with the positioning recess portion to position the holder in the rotation direction.

A position of the spindle in the rotation direction with respect to the main shaft, that is, a phase of the spindle is at a position (original position) where the main shaft check valve B and the holder check valve B correspond to each other when the hydraulic fluid is supplied to the holder. In this way, one or a plurality of positioning recess portions are formed at positions on a circle concentric with the holder check valve B, and a unit including the main shaft check valve B and a device to advance and retreat the main shaft check valve B is engaged in a positioning recess portion formed at an arbitrary position different from the original position by controlling the rotation position (phase) of the spindle, and accordingly, for example, when the posture of a workpiece or the like held by the holder is changed, the workpiece or the like can be accurately held at that position.

As an eleventh means, around the main shaft check valve B, an insertion portion having a tapered surface tapered to narrow toward a tip end is formed, and on an opening at the holder fluid passage B side into which the insertion portion is inserted, a corresponding tapered surface that expands toward a tip end is formed.

Accordingly, the peripheries of the main shaft check valve B and the holder check valve B are guided by the tapered surfaces at the time of connection, so that members are less likely to collide, and since the tapered surfaces rub against each other, the sealing performance of a case surrounding the main shaft check valve B and the holder check valve B when these valves are communicated with each other is improved, and the hydraulic fluid inside is less likely to leak.

As a twelfth means, the holder includes a holder fluid passage A and a holder check valve A in a mechanism to be grasped by the spindle, and in a state where the holder is attached to the spindle side, a valve element of the holder check valve A retreats by being pushed by the main shaft check valve A, the hydraulic fluid is allowed to flow into the holder from the spindle side through the main shaft check valve A, and by detaching the holder from the spindle, the valve element returns so that the hydraulic fluid does not leak.

This claims a detailed configuration of the holder including the holder fluid passage A and the holder check valve A to be used in the above-described main-shaft and holder combination. By including the holder fluid passage A and the holder check valve A in the mechanism to be grasped by the spindle, the holder is made more compact.

As a thirteenth means, the holder includes a holder check valve B in the holder fluid passage B in which the main shaft check valve B is inserted, and in a state where the holder is attached to the spindle side, a valve element of the holder check valve B retreats by being pushed by the main shaft check valve B, the hydraulic fluid is allowed to flow into the holder from the main shaft side through the main shaft check valve B, and by detaching the holder from the spindle, the valve element returns so that the hydraulic fluid does not leak.

This claims a detailed configuration of the holder including the holder fluid passage B and the holder check valve B to be used in the above-described main-shaft and holder combination. The holder fluid passage B of the holder is structured so that the main shaft check valve B is inserted therein. That is, the holder is structured to be supplied with the hydraulic fluid by advancing from the main shaft side to the holder side.

As a fourteenth means, the holder includes a holder fluid passage A inside a mechanism to be grasped by the spindle, and includes a holder check valve B in a holder fluid passage B in which the main shaft check valve B is inserted, a valve element of the holder check valve B retreats by being pushed by the main shaft check valve B, the hydraulic fluid is allowed to flow into the holder from the main shaft side through the main shaft check valve B, and by detaching the holder from the spindle, the valve element returns so that the hydraulic fluid does not leak.

This claims a detailed configuration of the holder including the holder fluid passage A, the holder fluid passage B, and the holder check valve B to be used in the above-described main-shaft and holder combination. The holder fluid passage B of the holder is structured so that the main shaft check valve B is inserted therein. That is, the holder includes two hydraulic fluid supply units.

As a fifteenth means, the holder includes a holder fluid passage A and a holder check valve A in a mechanism to be grasped by the spindle, and includes a holder check valve B in a holder fluid passage B in which the main shaft check valve B is inserted, and in a state where the holder is attached to the spindle side, a valve element of the holder check valve A retreats by being pushed by the main shaft check valve A, the hydraulic fluid is allowed to flow into the holder from the spindle side through the main shaft check valve A, a valve element of the holder check valve B retreats by being pushed by the main shaft check valve B, the hydraulic fluid is allowed to flow into the holder from the main shaft side through the main shaft check valve B, and by detaching the holder from the spindle, the valve elements return so that the hydraulic fluid does not leak.

This claims a detailed configuration of the holder including the holder fluid passage A and the holder check valve A, and the holder fluid passage B and the holder check valve B to be used in the above-described main-shaft and holder combination. The holder fluid passage B of the holder is structured so that the main shaft check valve B is inserted therein. That is, the holder includes two hydraulic fluid supply units.

As a sixteenth means, a gripping mechanism for holding a tool or a workpiece (hereinafter, simply referred to as "a workpiece or the like"), and a cylinder device that drives the gripping mechanism, are provided, and by feeding a hydraulic fluid to the cylinder device through the holder fluid passage A or the holder fluid passage B, the cylinder device is operated to drive the gripping mechanism.

The sixteenth means claims a holder including a detailed mechanism using a hydraulic pressure of a supplied hydraulic fluid.

Accordingly, the hydraulic fluid can be fed to the cylinder device by using either the holder fluid passage A or the holder fluid passage B, and resultantly, the gripping mechanism can be driven.

The "cylinder device" is a device having a basic structure including a piston housed in a cylinder, and receives a supply of a hydraulic fluid from the outside, and by using a hydraulic pressure of the hydraulic fluid, operates the piston relative to the cylinder. The piston may be activated or the cylinder may be activated. The same definition of the cylinder device applies hereinafter.

The "gripping mechanism" is configured to be driven in one direction by the cylinder device, and preferably uses a force of, for example, a spring, etc., to release a workpiece.

The gripping mechanism is preferably, for example, a chuck device, a collet chuck device, a link clamp device, a swing clamp device, a ball clamp device, or the like. The same definition of the gripping mechanism applies hereinafter.

As a seventeenth means, a gripping mechanism for holding a tool or a workpiece (hereinafter, simply referred to as "a workpiece or the like"), and a cylinder device that drives the gripping mechanism, are provided, and the cylinder device feeds a hydraulic fluid to both sides of a piston inside the cylinder device through the holder fluid passage A and the holder fluid passage B, respectively, and accordingly reciprocates the piston, and reciprocates the gripping mechanism by the piston.

The seventeenth means claims a holder including a detailed mechanism using a hydraulic pressure of a supplied hydraulic fluid.

Accordingly, the hydraulic fluid is fed to the cylinder device by using both of the holder fluid passage A and the holder fluid passage B, and by adjusting pressures of the hydraulic fluid in the holder fluid passage A and the holder fluid passage B, the piston can be reciprocated. Accordingly, the gripping mechanism can be operated not only in one direction but also in both directions.

As an eighteenth means, a gripping mechanism for holding a tool or a workpiece (hereinafter, simply referred to as "a workpiece or the like"), and a first cylinder device and a second cylinder device that drive the gripping mechanism, are provided, and coolant is fed to the first cylinder device through the holder fluid passage A, and hydraulic oil is fed to the second cylinder device through the holder fluid passage B, respectively, and the gripping mechanism is driven by cooperation between a pressure generated in the first cylinder device by the supply of the coolant and a pressure generated in the second cylinder device by the supply of the hydraulic oil.

The eighteenth means claims a holder including a detailed mechanism using hydraulic pressures of supplied hydraulic fluids.

Accordingly, both of the holder fluid passage A and the holder fluid passage B are used, and by synthesizing hydraulic pressures from the two passages, the gripping mechanism can be driven by a stronger force than a single pressure. In the hydraulic pressure control, the hydraulic fluids may be simultaneously supplied from both passages, or may be supplied from the passages at different timings.

As a nineteenth means, a first gripping mechanism and a second gripping mechanism for holding a tool or a workpiece (hereinafter, simply referred to as "a workpiece or the like") are provided, and a first cylinder device that drives the first gripping mechanism and a second cylinder device that drives the second gripping mechanism are provided, and a hydraulic fluid is fed to the first cylinder device through the holder fluid passage A, and fed to the second cylinder device through the holder fluid passage B, respectively, and a workpiece or the like is held by the first gripping mechanism and the second gripping mechanism.

The nineteenth means claims a holder including a detailed mechanism using a hydraulic pressure of a supplied hydraulic fluid.

In a case where the first gripping mechanism and the second gripping mechanism are provided, by feeding a hydraulic fluid to the first cylinder device through the holder fluid passage A and to the second cylinder device through the holder fluid passage B, respectively, the first gripping mechanism and the second gripping mechanism can be driven separately.

As a twentieth means, a gripping mechanism for holding a tool or a workpiece (hereinafter, simply referred to as "a workpiece or the like"), a holder fluid passage that is communicated with the main shaft fluid passage of the spindle side and is supplied with coolant from the spindle side in a state where the holder is attached to the spindle side, a first cylinder device communicated with the holder fluid passage, and a second cylinder device communicated with the holder fluid passage B, are provided, a pressure is transmitted by hydraulic oil to the first cylinder device and the second cylinder device, the first cylinder device is driven by coolant supplied through the holder fluid passage, and a pressure generated by driving of the first cylinder device increases a pressure of the hydraulic oil in the second cylinder device to increase a force to hold a workpiece or the like by the gripping mechanism.

The twentieth means claims a holder including a detailed mechanism using a hydraulic pressure of a supplied hydraulic fluid.

Accordingly, a gripping force for gripping the gripping mechanism by the second cylinder is increased by a pressure applied from the first cylinder device, so that a workpiece or the like can be held by a stronger force.

As a twenty-first means, by providing the holder fluid passage A so as to penetrate through the holder, a holder penetrating passage (hereinafter, referred to as a holder penetrating passage A) is formed, and a supply check valve (hereinafter, referred to as a supply check valve A) for supplying a hydraulic fluid is provided at a downstream-side end portion of the holder penetrating passage A.

As a twenty-second means, by providing the holder fluid passage B so as to penetrate through the holder, a holder penetrating passage (hereinafter, referred to as a holder penetrating passage B) is formed, and a supply check valve (hereinafter, referred to as a supply check valve B) for supplying a hydraulic fluid is provided at a downstream-side end portion of the holder penetrating passage B.

As a twenty-third means, by providing the holder fluid passage A and the holder fluid passage B so as to penetrate through the holder, first and second penetrating passages (hereinafter, referred to as a holder penetrating passage A and a holder penetrating passage B) are formed, and supply check valves (hereinafter, referred to as a supply check valve A and a supply check valve B) for supplying a hydraulic fluid are provided at downstream-side end portions of the first and second penetrating passages A and B.

By attaching these to the main shaft, a function to relay hydraulic oil through the holder and supply it to a mechanism lower than the holder is realized.

As a twenty-fourth means, a configuration is made in which a hydraulic fluid is made to flow between main shaft fluid passages A, B provided in the main shaft and holder penetrating passages A, B provided in the fluid passage holder, the gripping base includes a gripping mechanism for holding a workpiece or the like, a cylinder that drives the gripping mechanism, and an internal passage communicated with the cylinder, a receiving check valve is provided at an upstream-side end portion of the internal passage, and
when a supply check valve A or B of the holder is joined to the receiving check valve, the supply check valve A or B is connected to the receiving check valve so as to feed the hydraulic fluid to the cylinder, and when the supply check valves A and B of the fluid passage holder are removed from the receiving check valve, the supply check valve A or B is disconnected from the receiving check valve so as to prevent leakage of the hydraulic fluid.

Accordingly, in a state where a workpiece is held, even when the supply check valves A, B and the receiving check valves A, B are disconnected, the hydraulic fluid is sealed, so that the workpiece is kept held. Therefore, in a state where the workpiece gripping base holds a workpiece, the workpiece held by the workpiece gripping base can be machined with a tool attached to the main shaft. Therefore, multi-process machining can be performed in the same manner as described above. In addition, there is no need to construct piping of a fluid passage in the workpiece gripping base.

As a twenty-fifth means, a configuration is made in which a hydraulic fluid is made to flow between main shaft fluid passages A, B provided in the main shaft and holder penetrating passages A, B provided in the fluid passage holder, the gripping base includes a first gripping mechanism for holding a workpiece or the like, a first cylinder that drives the first gripping mechanism, a second gripping mechanism for holding a workpiece or the like, a second cylinder that drives the second gripping mechanism, and internal passages communicated with the first and second cylinders, and receiving check valves are respectively provided at upstream-side end portions of the internal passages, and when the supply check valves A and B of the holder are joined to the receiving check valves, the supply check valves A and B are connected to the receiving check valves so as to feed the hydraulic fluid to the first and second cylinders, and when the supply check valves A and B of the fluid passage holder are removed from the receiving check valves, the supply check valve A or B and the receiving check valves are disconnected from each other so as to prevent leakage of the hydraulic fluid.

Accordingly, for example, in a state where a workpiece is held on the gripping base, the workpiece held by the gripping base can be machined with a tool attached to the main shaft. Multi-process machining can be performed in such a manner that, for example, after one side of the workpiece held by the holder is machined, the workpiece is held on the gripping base, and the other side of the workpiece is machined with a tool attached to the main shaft. In addition, since the hydraulic fluid is made to flow through the fluid passage holder, there is no need to construct piping of a fluid passage.

The inventions shown in the first to twenty-fifth means described above can be arbitrarily combined. For example, a configuration in which, to a configuration of all or a part of the inventions shown in the first, second, and fifth means, at least a part of configuration of at least one of the other inventions is added, is possible.

It is also possible that arbitrary configurations are extracted from the inventions shown in the first to twenty-fifth means, and the extracted configurations are combined. The applicant of the present application has an intention to acquire rights to the inventions including these configurations.

### Effects of Invention

According to the present invention, a hydraulic fluid can be supplied to the holder from the main shaft side through the fluid passages, and when the holder is detached from the main shaft, the hydraulic fluid can be prevented from leaking from the fluid passages.

### Brief Description of Drawings

[FIG. 1] FIG. 1 is a partial sectional view illustrating a state where a holder is attached to a main shaft in a first embodiment.
[FIG. 2] FIG. 2 is a partial sectional view just before the holder is attached to the main shaft or just after the holder is detached from the main shaft in the first embodiment.
[FIG. 3] FIG. 3 is a partial sectional view illustrating a state where a holder is attached to a main shaft, and a second hydraulic oil supply unit is not connected in a second embodiment.
[FIG. 4] FIG. 4 is a partial sectional view illustrating a state where the holder is attached to the main shaft, and the second hydraulic oil supply unit is connected in the second embodiment.
[FIG. 5] FIG. 5 is a plan view of the holder according to the second embodiment.
[FIG. 6] FIG. 6 is a partial sectional view illustrating a state where a holder is attached to a main shaft, and a second hydraulic oil supply unit is not connected in a third embodiment.
[FIG. 7] FIG. 7 is a partial sectional view illustrating a state where the holder is attached to the main shaft, and the second hydraulic oil supply unit is connected in the third embodiment.
[FIG. 8] FIG. 8 is a sectional view of a holder according to a fourth embodiment.
[FIG. 9] FIG. 9 is a sectional view of a holder according to a fifth embodiment.
[FIG. 10] FIG. 10 is a partial sectional view of a holder according to a sixth embodiment.
[FIG. 11] FIG. 11 is a sectional view illustrating a state where a collet chuck is closed in the holder according to the sixth embodiment.
[FIG. 12] FIG. 12 is a sectional view illustrating a state where the collet chuck is opened in the holder according to the sixth embodiment.
[FIG. 13] FIG. 13 is a sectional view illustrating a state where the collet chuck is opened by a stronger force than in FIG. 12 in the holder according to the sixth embodiment.
[FIG. 14] FIG. 14 is a partial sectional view illustrating a state where a holder is attached to a main shaft in a seventh embodiment.
[FIG. 15] FIG. 15 is a partial sectional view of a main shaft, a relay holder, and a gripping base in an eighth embodiment.
[FIG. 16] FIG. 16 is a partial sectional view of a main shaft, a relay holder, and a gripping base in a ninth embodiment. Description of Embodiments

### First Embodiment

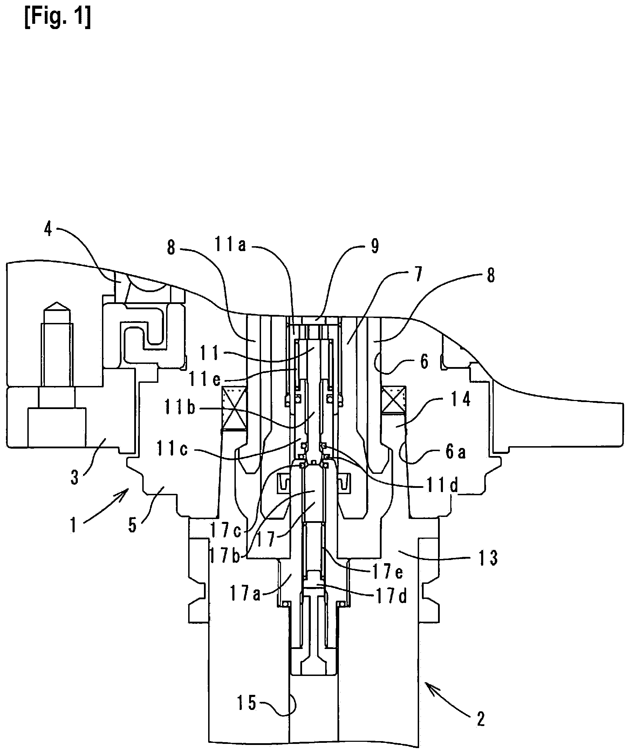

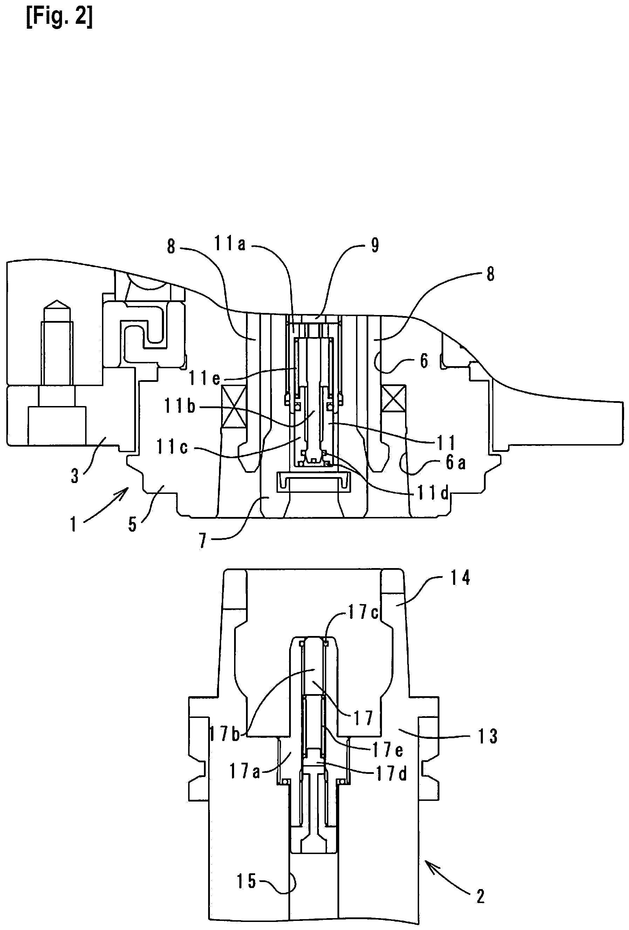

A combination of a main shaft 1 and a holder 2 according to a first embodiment will be described based on FIGS. 1 and 2. The main shaft 1 and the holder 2 of the first embodiment are types whose members come into contact with each other by two-plane constraint. In the first embodiment, the periphery of a junction between the main shaft 1 and the holder 2 dedicated to the present invention will be mainly described. Each drawing is a sectional view, and hatching is omitted.

The main shaft 1 includes a main shaft cylinder 3, and a spindle 5 supported on the main shaft cylinder 3 by a bearing 4. The spindle 5 is rotated at a high speed with respect to the main shaft cylinder 3 by a rotary mechanism not illustrated. A drawbar 7 as the pushing and pulling rod is disposed at a center inside a housing 6 as a circular inner circumferential surface formed inside the spindle 5, and around the drawbar 7, a plurality of clamp claws 8 of a collet chuck are disposed. The drawbar 7 is a member having a circular cross section, and a central axis of the drawbar 7 is disposed coaxially with a rotation axis of the spindle 5. A lower portion of the housing 6 is formed as a joining recess portion 6a with an expanded diameter. An inner diameter of the recess portion 6a is tapered so as to widen downward. A main shaft fluid passage 9 is formed inside the drawbar 7, and a main shaft check valve 11 is disposed inside the main shaft fluid passage 9. Inside the main shaft fluid passage 9, hydraulic oil is sealed, and the main shaft check valve 11 serves as a lid of the passage.

The main shaft check valve 11 has a case 11a, and a rod 11b is erected at a center inside the case 11a. A tip end of the rod 11b is configured to have a bulged shape. Around the rod 11b, a sleeve 11c as a valve element is disposed to surround the rod 11b. On an inner circumference close to a tip end (lower end) of the sleeve 11c, an O-ring 11d for improving the sealing performance is disposed. The sleeve 11c is slidable along a longitudinal direction of the rod 11b, and is always biased by a coil spring 11e toward a tip end, that is, toward the holder 2 to which the sleeve is joined.

At a tip end of the holder 2, a portion to be joined to the spindle 5 is formed as an HSK-type shank 13.

A tip end (upper end) of the shank 13 is formed as a coronal joining portion 14 whose outer circumferential surface comes into contact with an inner circumferential surface of the recess portion 6a of the housing 6 on the spindle 5 side. The joining portion 14 is configured to narrow toward a tip end. At a center position of the shank 13, a holder fluid passage 15 is formed along the longitudinal direction. The holder fluid passage 15 is connected to a space surrounded by the joining portion 14. A holder check valve 17 is disposed at a position surrounded by the joining portion 14 inside the holder fluid passage 15. Hydraulic oil is sealed inside the holder fluid passage 15, and the holder check valve 17 serves as a lid of the passage.

The holder check valve 17 has a case 17a, and at a center inside the case 17a, a rod 17b as a valve element is disposed. On an inner circumference close to a tip end (upper end) of the case 17a, an O-ring 17c for improving the sealing performance is disposed. At a rear side (lower side) of the rod 17b, a stay 17d is fixed. The rod 17b can advance and retreat along a longitudinal direction of the holder fluid passage 15, and is always biased by a coil spring 17e disposed between the rod 17b and the stay 17d toward a tip end, that is, toward the main shaft 1 (the spindle 5) to which the rod is joined.

Next, an operation of the first embodiment configured as described above will be described. An operation to automatically grasp (attach) the holder 2 on the main shaft 1 by an automatic tool changer (ATC) is executed by a sequence-controlled grasping mechanism not illustrated.

As illustrated in FIG. 2, in a state where the main shaft 1 and the holder 2 are not connected, the sleeve 11c of the main shaft check valve 11 biased by the coil spring 11e advances, and projects further downward than the tip end of the rod 11b. In this state, an inside surface of the sleeve 11c and a tip end outer circumference of the rod 11b come into close contact with each other via the O-ring 11d, and the main shaft fluid passage 9 is sealed by the main shaft check valve 11 and the hydraulic oil does not leak.

On the other hand, the rod 17b of the holder check valve 17 of the shank 13 on the holder 2 side is biased to advance by the coil spring 17e, and comes into close contact with the O-ring 17c on the inner circumference of the case 17a, and the holder fluid passage 15 is sealed by the holder check valve 17, so that the hydraulic oil does not leak.

When the holder 2 is attached to the main shaft 1, first, the shank 13 of the holder 2 is advanced from the lower side toward the housing 6 on the spindle 5 side. At substantially the same time as the joining portion 14 at the tip end of the shank 13 is fitted to the housing 6, the drawbar 7 retreats, and by swinging the clamp claws 8 outward by the tip-end bulged portion, the shank 13 is grasped.

Along with this connecting operation, tip ends of the main shaft check valve 11 and the holder check valve 17 come into contact with each other, the sleeve 11c of the main shaft check valve 11 retreats against the biasing force of the coil spring 11e (that is, moves toward the spindle 5), and the rod 17b of the holder check valve 17 retreats against the biasing force of the coil spring 17e (that is, moves toward the holder 2). Accordingly, passages inside the main shaft check valve 11 and the holder check valve 17 are opened, and the hydraulic oil of the main shaft 1 side is supplied to the holder 2 side through the main shaft fluid passage 9 and the holder fluid passage 15, by which a pressure of the hydraulic oil can be transmitted to the downstream, and by the pressure of the hydraulic oil, the mechanism on the holder side can be operated.

By disconnecting the main shaft 1 and the holder 2 from each other again, the main shaft check valve 11 and the holder check valve 17 are automatically closed again, and the hydraulic oil inside these does not leak. The hydraulic oil has higher viscosity than coolant, so that the mechanism on the holder 2 side can be caused to exert a stronger gripping force than in the case using coolant.

### Second Embodiment

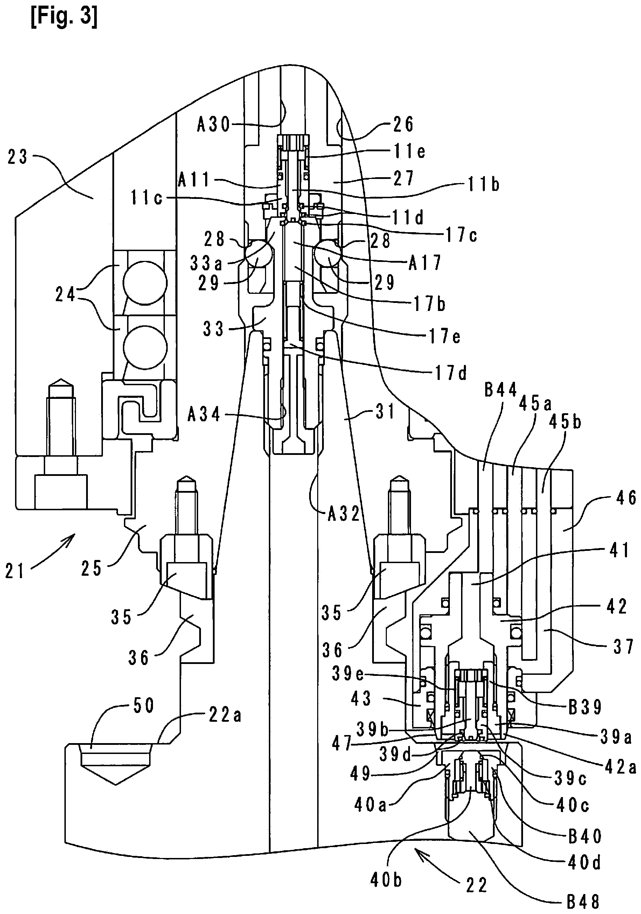

A combination of a main shaft 21 and a holder 22 according to a second embodiment will be described based on FIGS. 3 to 5. The main shaft 21 and the holder 22 of the second embodiment are types whose members come into contact with each other by two-plane constraint. In the second embodiment, the periphery of a junction between the main shaft 21 and the holder 22 dedicated to the present invention will be mainly described. Each drawing is a sectional view, and hatching is omitted.

The main shaft 21 includes a main shaft cylinder 23, and a spindle 25 supported on the main shaft cylinder 23 by a bearing 24. The spindle 25 is rotated at a high speed with respect to the main shaft cylinder 23 by a rotary mechanism not illustrated.

There are two hydraulic pressure supply routes from the main shaft 21 side to the holder 22 side of the second embodiment. The routes are a first hydraulic oil supply unit for supplying a hydraulic pressure from the spindle 25 to a tapered shank 31, and a second hydraulic oil supply unit for supplying a hydraulic pressure from a portion that does not rotate on the main shaft 21 side, that is, in this second embodiment, from the main shaft cylinder 23 to the tapered shank 31. Hereinafter, a reference sign "A" is attached to explain a member constituting the first hydraulic oil supply unit, and a reference sign "B" is attached to explain a member constituting the second hydraulic oil supply unit.

At a center inside a housing 26 as a circular inner circumferential surface formed inside the spindle 25, a drawbar 27 as the pushing and pulling rod is disposed. In a plurality of through holes 28 formed in a circumferential direction of the drawbar 27, balls 29 are respectively housed. Inside the drawbar 27, a main shaft fluid passage A30 is formed, and inside the main shaft fluid passage A30, a main shaft check valve A11 configured similarly to the main shaft check valve 11 of the first embodiment is disposed. Inside the main shaft fluid passage A30, the hydraulic oil is sealed, and the main shaft check valve A11 serves as a lid of the passage. In the second embodiment, concerning the main shaft check valve A11, the same configuration as in the main shaft check valve 11 of the first embodiment is provided with the same reference signs in the drawings, and detailed description thereof will be omitted.

At a tip end of the holder 22, a portion to be joined to the spindle 25 is formed as a BT-type tapered shank 31. At a center of the tapered shank 31, a holder fluid passage A32 is formed. To an opening position of the holder fluid passage A32 of the tapered shank 31, that is, to an upper end position of the tapered shank 31, a pull stud 33 is fitted. The pull stud 33 has a bulged head portion 33a at a tip end, and at an inside center position, a small passage A34 communicated with the holder fluid passage A32 is formed along the longitudinal direction. Inside the small passage A34, a holder check valve A17 similar to the holder check valve 17 of the first embodiment is disposed. Inside the holder fluid passage A32 and the small passage A34, the hydraulic oil is sealed, and the holder check valve A17 serves as a lid of the passages. In the second embodiment, concerning the holder check valve A17, the same configuration as in the holder check valve 17 of the first embodiment is provided with the same reference signs in the drawings, and detailed description thereof will be omitted.

Between the spindle 25 on the main shaft 21 side and the holder 22, a key set for locking a phase position of the holder 22 in a rotation direction (circumferential direction) with respect to the spindle 25 is provided. The key set consists of a key 35 on the spindle 25 side and a key groove 36 on the holder 22 side.

As illustrated in FIGS. 2 and 3, the second hydraulic oil supply unit includes a check valve movement mechanism 37 formed on the main shaft cylinder 23 side, a main shaft check valve B39 constituting the second hydraulic oil supply unit which receives a hydraulic pressure from the check valve movement mechanism 37, and a holder check valve B40 formed in the holder 22.

The check valve movement mechanism 37 is disposed inside a bracket 46 fitted to the main shaft cylinder 23. Main components of the check valve movement mechanism 37 are a cylinder 41, a piston 42 housed inside the cylinder 41, a guide 43 that guides the piston 42, and three passages B44, 45a, and 45b formed in the bracket 46 to supply the hydraulic oil into the cylinder 41, etc. The hydraulic oil is sealed inside the cylinder 41 and inside the passages A44, 45a, and 45b, and the guide 43 serves as a lid of the cylinder and the passages. The piston 42 is disposed so as to be able to advance and retreat in an up-down direction by being guided by the guide 43. The tip end of the piston 42 projects to the outside of the guide 43 and forms a ring-shaped insertion portion 42a. An outer circumferential surface of the insertion portion 42a is formed into a tapered surface 47 that becomes thinner toward a tip end. The main shaft fluid passage B44 supplies the hydraulic oil into an upper housing sealed by the piston 42. By adjusting pressures of the hydraulic oil to be respectively supplied to the piston passages 45a and 45b, the piston 42 is advanced and retreated.

In an internal passage of the piston 42, a main shaft check valve B39 is disposed. The hydraulic oil is sealed inside the cylinder 41 at an upper side of the piston 42, and the main shaft check valve B39 serves as a lid of the cylinder.

The main shaft check valve B39 has a case 39a, and at a center inside the case 39a, a rod 39b as a valve element is erected. A tip end of the rod 39b is configured to have a bulged shape. Around the rod 39b, a sleeve 39c is disposed to surround the rod 39b. On an inner circumference close to a tip end (lower end) of the sleeve 39c, an O-ring 39d for improving the sealing performance is disposed. The sleeve 39c is slidable along a longitudinal direction of the rod 39b, and is always biased by a coil spring 39e toward a tip end, that is, toward the holder 2 to which the sleeve is joined.

A holder check valve B40 is disposed in a holder fluid passage B48 having an opening in an upper-side horizontal surface 22a of the holder 22. The holder check valve B40 is disposed at a position slightly retreating from the opening of the holder fluid passage B48 inside the holder fluid passage B48. Therefore, in a front surface of the holder check valve B40, a recess portion 49 in which the insertion portion 42a at the tip end of the piston 42 on the main shaft 21 side is housed is formed. An inner circumferential surface of the recess portion 49 is tapered according to the tapered surface 47 of the insertion portion 42a.

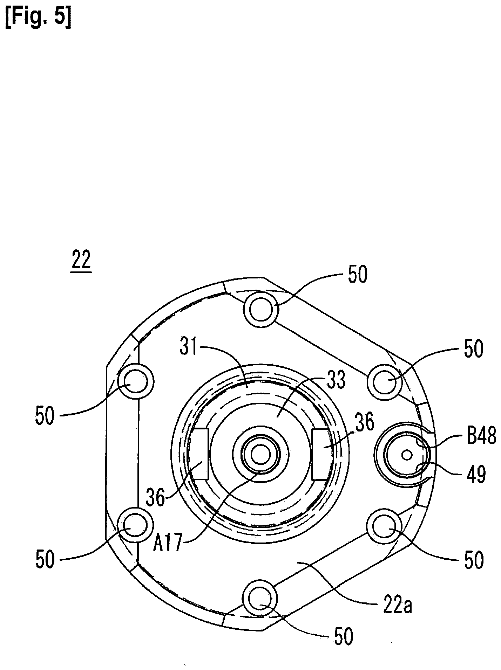

The holder check valve B40 has a case 40a, and at a center inside the case 40a, a rod 40b as a valve element is disposed. On an inner circumference close to a tip end (upper end) of the case 40a, an O-ring 40c for improving the sealing performance is disposed. At a rear side (lower side) of the rod 40b, a stay 40d is fixed. The rod 40b can advance and retreat along a longitudinal direction of the holder fluid passage B48, and is always biased by a coil spring 40d toward a tip end, that is, toward the main shaft 21 (the main shaft cylinder 23) to which the rod is joined. As illustrated in FIG. 5, on the horizontal surface 22a of the holder 22 in which the holder fluid passage B48 is opened, a plurality of (for example, in FIG. 5, six) positioning recess portions 50 are formed around the tapered shank 31 at equal distances from a center of the tapered shank 31. The positioning recess portions 50 are shaped similarly to the recess portion 49 so as to correspond to the shape of the insertion portion 42a of the tip end of the piston 42, and house the insertion portion 42a.

Next, an operation of the second embodiment configured as described above will be described.

An operation to automatically grasp (attach) the holder 22 on the main shaft 21 by an automatic tool changer (ATC) is executed by a sequence-controlled grasping mechanism not illustrated. An operation of the first hydraulic oil supply unit that supplies a hydraulic pressure from the spindle 25 to the tapered shank 31 in the second embodiment is the same as in the first embodiment, and detailed description thereof will be omitted here, and an operation of the second hydraulic oil supply unit will be mainly described.

First, an operation to attach the tapered shank 31 to the spindle 25 will be briefly described. In the second embodiment, when the pull stud 33 on the tapered shank 31 side comes into contact with the drawbar 27 on the spindle 25 side, by moving the drawbar 27 up, the balls 29 engage with the head portion 33a of the pull stud 33. Accordingly, the tapered shank 31 is fixed to the spindle 25 by the pull stud 33, and at the same time, the main shaft check valve A11 and the holder check valve B4 are connected and the valves are opened.

As illustrated in FIGS. 2 and 3, in a state where the tapered shank 31 is attached to the spindle 25, a slight gap is always formed between the main shaft cylinder 23 (that is, the bracket 46 forming a part of the main shaft cylinder 23) and the holder 22. As illustrated in FIG. 3, in a state where the main shaft cylinder 23 and the holder 22 are not connected in the second hydraulic oil supply unit, the sleeve 39c of the main shaft check valve B39 biased by the coil spring 39e advances. In this state, an inside surface of the sleeve 39c and a tip end outer circumference of the rod 39b come into close contact with each other via the O-ring 39d, and the hydraulic oil is sealed by the main shaft check valve 11 and does not leak from the cylinder 41.

On the other hand, the rod 40b of the holder check valve B40 in the holder fluid passage B48 on the holder 22 side is biased to advance by the coil spring 40d and comes into close contact with the O-ring 40c on the inner circumference of the case 40a, and the holder fluid passage B48 is sealed by the holder check valve B40 and the hydraulic oil does not leak.

At this time, the tip end of the piston 42 does not interfere, so that the holder 2 attached to the spindle 25 can rotate together with the spindle 25. Therefore, for example, when a machining tool is attached to the tip end of the holder 2, the machining tool can be used by rotating the spindle 25. In addition, for example, when a workpiece is grasped by a chuck mechanism not illustrated provided at the tip end of the holder 2 by activating the second hydraulic oil supply unit, the position of the spindle 25 is controlled so that the insertion portion 42a at the tip end of the piston 42 is fixed in an arbitrary phase in the positioning recess portions 50, and accordingly, the workpiece can be changed in orientation and machined.

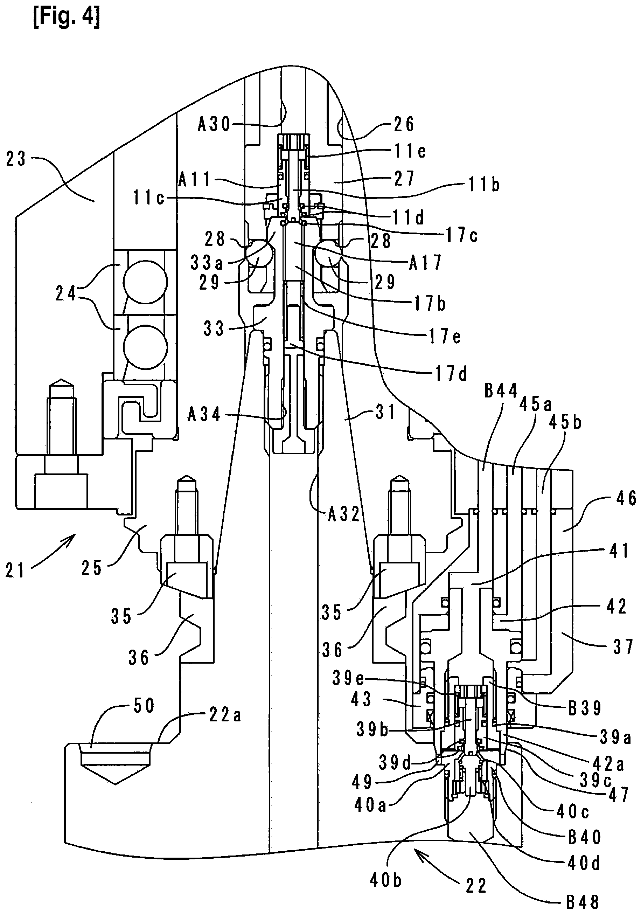

On the other hand, as illustrated in FIG. 4, in a state where the main shaft cylinder 23 and the holder 22 are connected in the second hydraulic oil supply unit, that is, the hydraulic oil is supplied from the main shaft cylinder 23 to the holder 22 side, and by a pressure of the hydraulic oil, the mechanism on the holder side can be operated. The connecting operation of the second hydraulic oil supply unit is executed, for example, as follows.

First, the main shaft cylinder 23 is positioned with respect to the holder 22. At a stage where the holder 22 has not been connected to the spindle 25 side yet, in a state where central axes of the holder 22 and the spindle 25 match each other, a position of the holder check valve B40 of the holder 22 corresponding to a position of the piston 42 of the main shaft cylinder 23 (that is, a position of the main shaft check valve B39) is determined in relation to a rotation amount of the spindle 25 to which the holder 22 is attached, and by rotating the spindle 25, the main shaft check valve B39 and the holder check valve B40 are disposed to face each other.

In this state, as the holder 22 is connected to the spindle 25 side (that is, the first hydraulic oil supply unit realizes a connected state), the key 35 is inserted in the key groove 36, and the spindle 25 is locked so as not to rotate in the circumferential direction.

Next, the hydraulic oil is supplied to the piston passage 45a and moves the piston 42 in an advancing direction to cause the insertion portion 42a of the piston 42 to be inserted in the recess portion 49. Accordingly, the main shaft cylinder 23 side and the holder 22 realize a connected state. At the same time, the main shaft check valve B39 is brought into contact with the holder check valve B40.

Then, the sleeve 39c of the main shaft check valve B39 retreats against the biasing force of the coil spring 39e (that is, moves toward the main shaft cylinder 23), and the rod 40b of the holder check valve B40 retreats against the biasing force of the coil spring 40d (that is, moves toward the holder 2) . Accordingly, the hydraulic oil of the main shaft 21 side is supplied to the holder 22 side, and by a pressure of the hydraulic oil, the mechanism on the holder side can be operated. The hydraulic oil has higher viscosity than coolant, so that the mechanism on the holder 22 side can be caused to exert a stronger gripping force than in the case using coolant. In addition, the hydraulic oil can be fed to the downstream.

### Third Embodiment

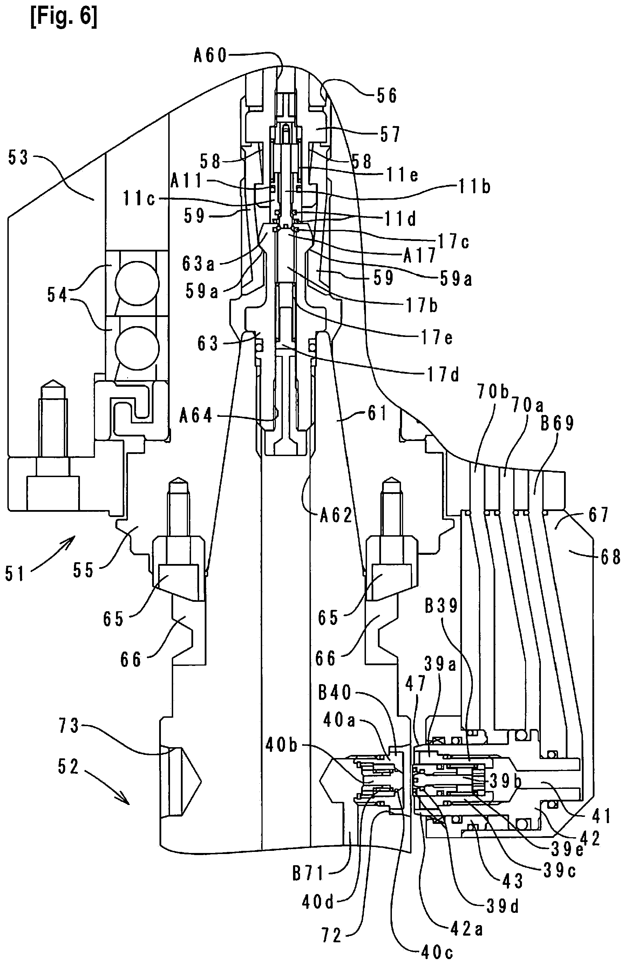

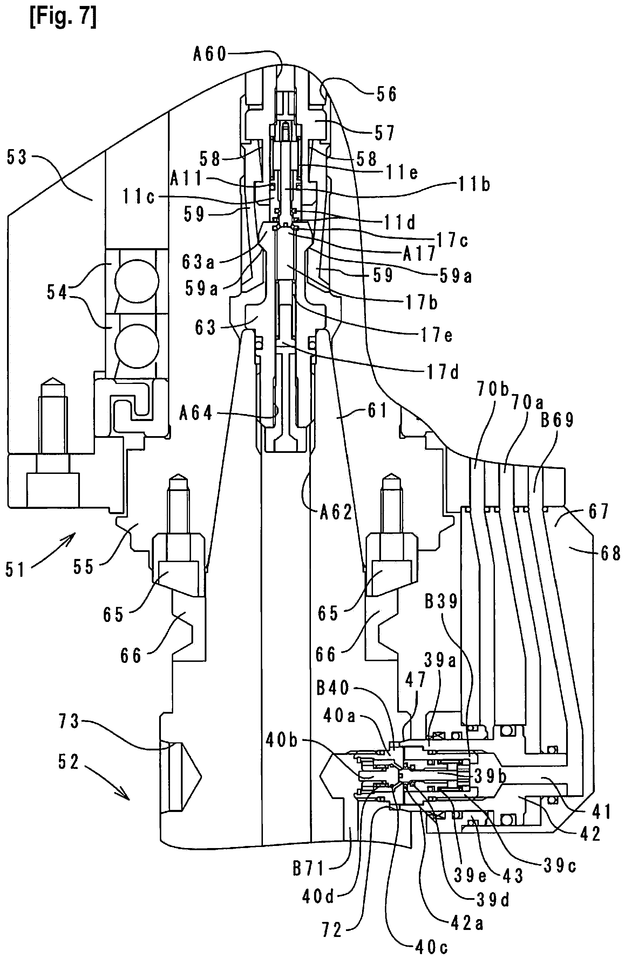

Based on FIGS. 6 and 7, a combination of a main shaft 51 and a holder 52 according to a third embodiment will be described.

The third embodiment is a variation of the second embodiment. A basic difference between them is that, although the connection direction in the main shaft check valve B39 and the holder check valve B40, etc., constituting the second hydraulic oil supply unit is the up-down direction in the second embodiment, the connection direction is in another direction (specifically, a horizontal direction) in the third embodiment. Hereinafter, a different configuration from the second embodiment will be described in detail, and overlapping detailed description will be omitted by using the same reference signs in the drawings. Each drawing is a sectional view, and hatching is omitted.

In the third embodiment, the periphery of a junction between the main shaft 51 and the holder 52 dedicated to the present invention will be mainly described. The main shaft 51 includes a main shaft cylinder 53, and a spindle 55 supported on the main shaft cylinder 53 by a bearing 54. The spindle 55 is rotated at a high speed with respect to the main shaft cylinder 53 by a rotary mechanism not illustrated.

A drawbar 57 as the pushing and pulling rod is disposed at a center inside a housing 56 as a circular inner circumferential surface formed inside the spindle 55. Inside a plurality of recess portions 58 formed in the circumferential direction of the drawbar 57, base portions of a lever 59 are respectively housed to be swingable inward and outward. Inside the drawbar 57, a main shaft fluid passage A60 is formed, and a main shaft check valve A11 configured similarly to the main shaft check valve 11 of the first embodiment is disposed inside the main shaft fluid passage A60. Inside the main shaft fluid passage A60, hydraulic oil is sealed, and the main shaft check valve A11 serves as a lid of the passage. In the third embodiment, concerning the main shaft check valve A11, the same configuration as in the main shaft check valve 11 of the first embodiment is provided with the same reference signs, and detailed description thereof will be omitted.

At a tip end of the holder 52, a portion to be joined to the spindle 55 is formed as a BT-type tapered shank 61. At a center of the tapered shank 61, a holder fluid passage A62 is formed. To an opening position of the holder fluid passage A62 of the tapered shank 31, that is, to an upper end position of the tapered shank 61, a pull stud 63 is fitted. The pull stud 63 has a bulged head portion 63a at a tip end, and at an inside center position, a small passage A64 communicated with the holder fluid passage A32 is formed along a longitudinal direction. Inside the small passage A34, a holder check valve A17 similar to the holder check valve 17 of the first embodiment is disposed. Inside the holder fluid passage A62 and the small passage A64, the hydraulic oil is sealed, and the holder check valve A17 serves as a lid of the passages. In the second embodiment, concerning the holder check valve A17, the same configuration as in the holder check valve 17 of the first embodiment is provided with the same reference signs, and detailed description thereof will be omitted.

Between the spindle 55 on the main shaft 51 side and the holder 52, a key set for locking a phase position of the holder 52 in a rotation direction (circumferential direction) with respect to the spindle 55 is provided. The key set consists of a key 65 on the spindle 55 side and a key groove 66 on the holder 22 side.

As illustrated in FIGS. 6 and 7, the second hydraulic oil supply unit includes a check valve movement mechanism 67 formed on the main shaft cylinder 23 side, a main shaft check valve B39 constituting the second hydraulic oil supply unit which receives a hydraulic pressure from the check valve movement mechanism 67, and a holder check valve B40 formed in the holder 22. The configurations of the main shaft check valve B39 and the holder check valve B40 are the same as in the second embodiment, so that description thereof will be omitted. The check valve movement mechanism 67 includes the cylinder 41, the piston 42, and the guide 43 which are the same as in the second embodiment, so that description thereof will be omitted. In a bracket 68 attached to the main shaft cylinder 53, three passages B69, 70a, and 70b to be connected to the cylinder 41 are formed. The main shaft fluid passage B69 supplies the hydraulic oil into an upper housing sealed by the piston 42. By adjusting pressures of the hydraulic oil to be respectively supplied to the piston passages 70a and 70b, the piston 42 is advanced and retreated. In the third embodiment, the piston 42 advances and retreats in the horizontal direction. That is, the main shaft check valve B39 advances and retreats in the horizontal direction.

A holder fluid passage B71 is formed so as to open in a side surface of the holder 52 close to the tapered shank 61. A holder check valve B40 is disposed inside the holder fluid passage B71. In the holder fluid passage B71, a recess portion 72 similar to the recess portion 49 of the second embodiment is formed. On an outer circumferential surface of the holder 22 on the same horizontal surface as a position where the holder fluid passage B71 is opened, positioning recess portions 73 having the same shape as that of the positioning recess portions 50 of the second embodiment are formed.

Next, an operation of the third embodiment configured as described above will be described. The operation of the third embodiment is also executed by sequence control of a controller not illustrated as in the second embodiment. An operation of the first hydraulic oil supply unit in the third embodiment that supplies the hydraulic oil from the spindle 55 to the tapered shank 61 is the same as in the first embodiment, so that detailed description will be omitted here.

An operation to attach the tapered shank 61 to the spindle 55 will be briefly described. In the third embodiment, when the pull stud 63 on the tapered shank 61 side comes into contact with the drawbar 57 on the spindle 55 side, the drawbar 57 moves up (retreats), and accordingly, an engagement portion 59a of the lever 59 engages with the head portion 63a of the pull stud 63 and is drawn toward the spindle 55 along with moving-up of the drawbar 57. Accordingly, the tapered shank 61 is fixed to the spindle 25, and at the same time, the main shaft check valve A11 and the holder check valve A17 are connected and the valves are opened.

An operation of the second hydraulic oil supply unit in the third embodiment is the same except that connection is made in the horizontal direction, so that description thereof will be omitted. With this configuration, the same effect as in the second embodiment is brought about.

### Fourth Embodiment

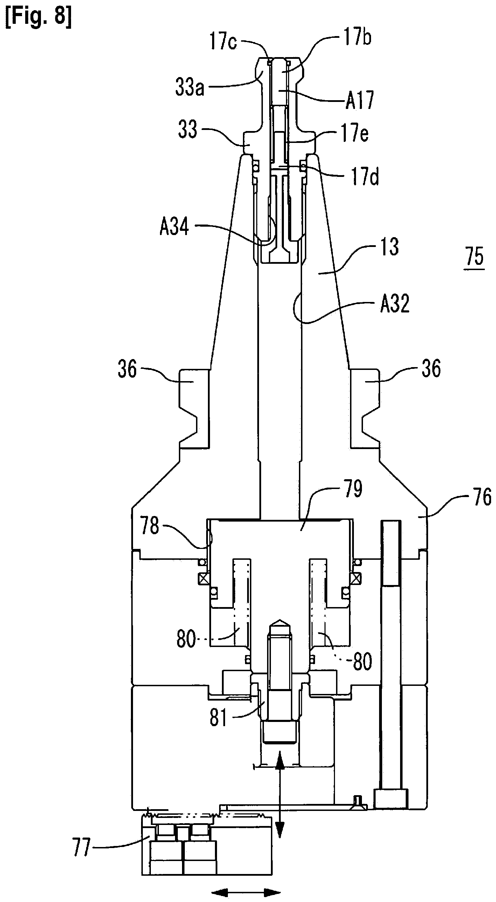

Based on FIG. 8, a holder 75 of a fourth embodiment will be described.

The holder 75 of the fourth embodiment is a variation of the holder 22 shown in the second embodiment. The holder 75 of the fourth embodiment is an example that has a similar structure on the first hydraulic oil supply unit side to that of the holder 22 of the second embodiment, and unlike the holder 22, does not have the structure on the second hydraulic oil supply unit side. In the fourth embodiment, a detailed structure and operation of a gripping mechanism of the holder 75 will be described. Hereinafter, a different configuration from the holder 22 of the second embodiment will be described in detail, and overlapping detailed description will be omitted by using the same reference signs as those of the holder 22 in the drawings. FIG. 8 is a sectional view, and hatching is omitted.

The holder 75 includes a shank 13 and a holder main body 76. At a lower position on the holder main body 76, a gripping device 77 consisting of three claws is disposed as a gripping mechanism for gripping a workpiece (just one claw is illustrated) . A cylinder 78 is formed inside the holder main body 76, and inside the cylinder 78, a piston 79 is disposed to be slidable in the up-down direction. The cylinder 78 of the present fourth embodiment is a single-acting cylinder. A coil spring 80 is disposed between the piston 79 and a bottom surface of the cylinder 78, and the piston 79 is always biased upward by the coil spring 80. The cylinder 78 is communicated with the holder fluid passage A32, and inside the housing of the cylinder 78 and the passage A32, hydraulic oil is sealed. A lever 81 is fixed to the piston 79. The lever 81 is a transmitting member that transmits a driving force generated when the piston 79 moves up and down to a transmission mechanism not illustrated inside the holder main body 76.

With this configuration, in a state where the holder 75 is grasped on the main shaft 21, as the hydraulic oil is supplied through the holder fluid passage A32, the piston 79 disposed at an upper acting position by a biasing force of the coil spring 80 is moved down by a hydraulic pressure of the hydraulic oil against the biasing force of the coil spring 80. In response to this movement, the lever 81 moves down, and the gripping device 77 is driven through the transmission mechanism (the claws move to gripping positions).

By supplying the hydraulic oil to the first hydraulic oil supply unit while the holder 75 is grasped by the spindle 25, a workpiece can be gripped by the gripping device 77, so that the workpiece can be machined with a machining jig not illustrated by rotating the spindle 25. Even after the holder 75 is detached from the spindle 25, the hydraulic oil does not leak from the holder check valve A17, so that the workpiece is kept gripped by the gripping device 77. At this time, the hydraulic oil has higher viscosity than coolant, so that the gripping device 77 can be caused to exert a stronger gripping force than in the case using coolant. Therefore, in lathe turning, displacement of a workpiece or the like and turning resistance can be reduced. To release the gripping state of the gripping device 77, by reverse flow of the hydraulic oil, the piston 79 is returned to the original position by the biasing force of the coil spring 80.

### Fifth Embodiment

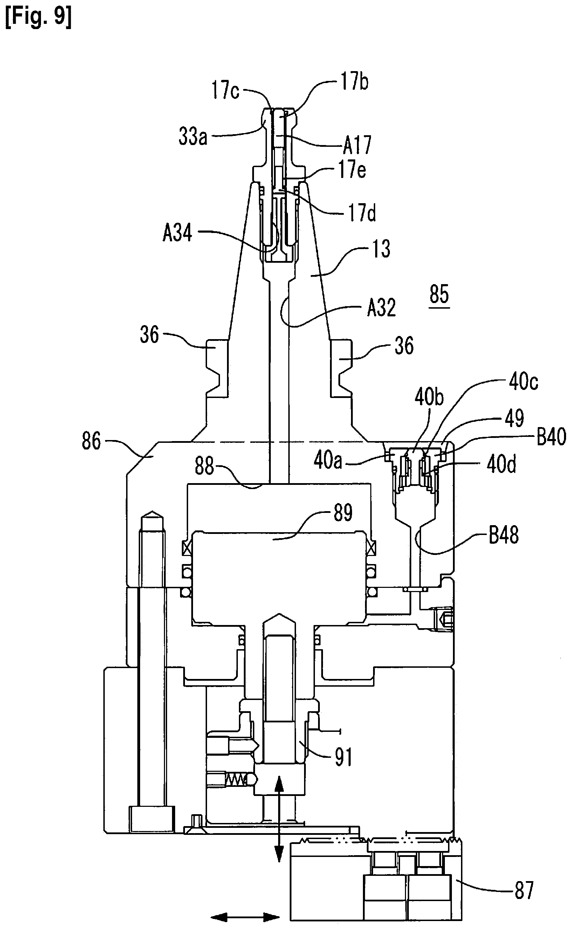

Based on FIG. 9, a holder 85 of a fifth embodiment will be described.

The holder 2 of the fifth embodiment is a variation of the holder 22 shown in the second embodiment. The holder 85 of the fifth embodiment is an example that has similar structures on the first and second hydraulic oil supply unit sides to those of the holder 22 of the second embodiment. In the fifth embodiment, a detailed structure and operation of a gripping mechanism of the holder 85 will be described. Hereinafter, a different configuration from the holder 22 of the second embodiment will be described in detail, and overlapping detailed description will be omitted by using the same reference signs as those of the holder 22 in the drawings. FIG. 9 is a sectional view, and hatching is omitted.

The holder 85 includes a shank 13 and a holder main body 86. At a lower position on the holder main body 86, a gripping device 87 consisting of three claws is disposed as a gripping mechanism for gripping a workpiece (just one claw is illustrated) . A cylinder 88 is formed inside the holder main body 86, and inside the cylinder 88, a piston 89 is disposed to be slidable in the up-down direction. The cylinder 88 of the present fifth embodiment is a double-acting cylinder. The cylinder 78 is communicated with the holder fluid passage A32 at an upper side, and is communicated with the holder fluid passage B48 at a lower side. Inside the housing of the cylinder 88 and inside the passages A32 and B48, hydraulic oil is sealed. A lever 91 is fixed to the piston 89. The lever 91 is a transmitting member that transmits a driving force generated when the piston 89 moves up and down to a transmission mechanism not illustrated inside the holder main body 86.

With this configuration, in a state where the holder 85 is grasped on the main shaft 21, by supplying the hydraulic oil through the holder fluid passage A32 on the first hydraulic oil supply unit side, the piston 89 can be moved down by a hydraulic pressure. On the other hand, by supplying the hydraulic oil through the holder fluid passage B48 on the second hydraulic oil supply unit side, the piston 89 can be moved up by a hydraulic pressure. By this upward/downward movement of the piston 89 caused by the hydraulic pressure, the lever 91 also moves up/down, and the gripping device 87 is driven through the transmission mechanism (the claws move between gripping positions and release positions). That is, by advancing and retreating the piston 89, the gripping device 87 can be freely operated.

In a state where the holder 85 is grasped by the spindle 25, a workpiece is gripped by the gripping device 87, and can be machined with a machining jig not illustrated by rotating the spindle 25. Even after the holder 75 with the gripping device 87 in a driven state is detached from the spindle 25, the hydraulic oil does not leak from the holder check valves A17 and B40, so that the workpiece is kept gripped by the gripping device 87. At this time, the hydraulic oil has higher viscosity than coolant, so that the gripping device 87 can be caused to exert a stronger gripping force than in the case using coolant. Therefore, in lathe turning, displacement of a workpiece or the like and turning resistance can be reduced. To release the gripping state of the gripping device 87, the piston 89 is returned to an original position by reverse flow of the hydraulic oil.

### Sixth Embodiment

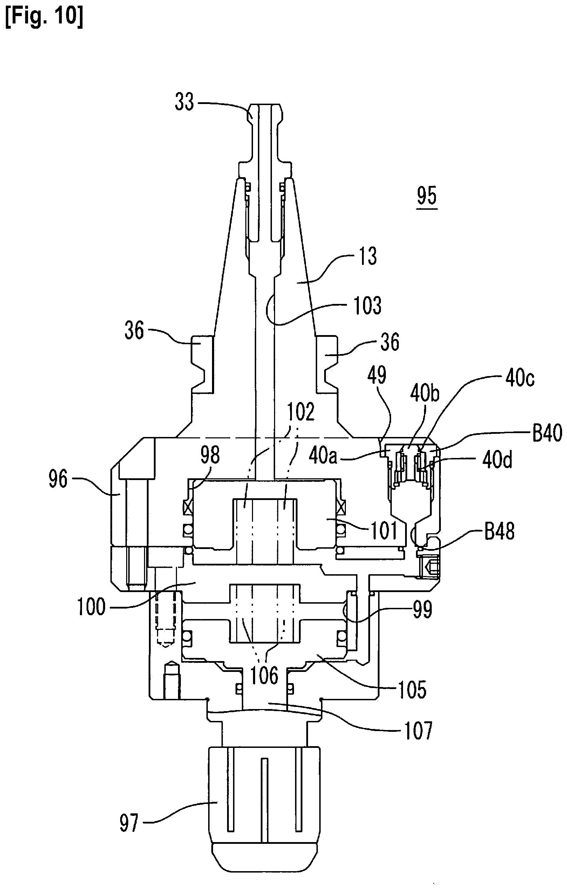

Based on FIGS. 10 to 13, a holder 95 of a sixth embodiment will be described.

The holder 95 of the sixth embodiment is a variation of the holder 22 shown in the second embodiment. The holder 95 of the sixth embodiment is an example that has a similar structure on the second hydraulic oil supply unit side to that of the holder 22 of the second embodiment, and unlike the holder 22, does not have the structure on the first hydraulic oil supply unit side. In the sixth embodiment, a detailed structure and operation of a gripping mechanism of the holder 95 will be described. Hereinafter, a different configuration from the holder 22 of the second embodiment will be described in detail, and overlapping detailed description will be omitted by using the same reference signs as those of the holder 22 in the drawings. Each drawing is a sectional view, and hatching is omitted.

A pull stud 33 fixed to a tip end of the holder 95 does not have the main shaft check valve A11. Therefore, as a spindle of the main shaft not illustrated corresponding to the holder 95, a spindle without a main shaft check valve is used. However, since the sixth embodiment has a configuration including the holder check valve B40, the main shaft not illustrated needs to include the corresponding main shaft check valve B39. That is, although not illustrated, in the sixth embodiment, in order to use the holder check valve B40, the main shaft corresponding to the holder 95 includes a second hydraulic oil supply unit similar to that of the second embodiment.

The holder 95 includes a shank 13 and a holder main body 96. At a lower position on the holder main body 96, a collet chuck 97 as a gripping mechanism for gripping a workpiece W is disposed. Inside the holder main body 96, two cylinders 98 and 99 are formed one above the other in a state of being overlapped with each other. The first cylinder 98 and the second cylinder 98 are partitioned by a partition wall 100. Inside the first cylinder 98 disposed at the upper side, a piston 101 is disposed to be slidable in the up-down direction. The first cylinder 98 and the piston 101 constitute a first cylinder device. A coil spring 102 is disposed between the piston 101 and the partition wall 100, and the piston 101 is always biased upward by the coil spring 102. Inside the pull stud 33 and the shank 13, a coolant passage 103 is formed, and is connected to an upper housing of the first cylinder 98. The holder fluid passage B48 is extended and connected to a lower housing of the first cylinder 98.

Inside the second cylinder 99 disposed at a lower side, a piston 105 is disposed to be slidable in the up-down direction. The second cylinder 99 and the piston 105 constitute a second cylinder device. A coil spring 106 is disposed between the piston 105 and the partition wall 100, and the piston 105 is always biased downward by the coil spring 106. The extended holder fluid passage B48 diverges halfway and is connected to a lower housing of the second cylinder 99.

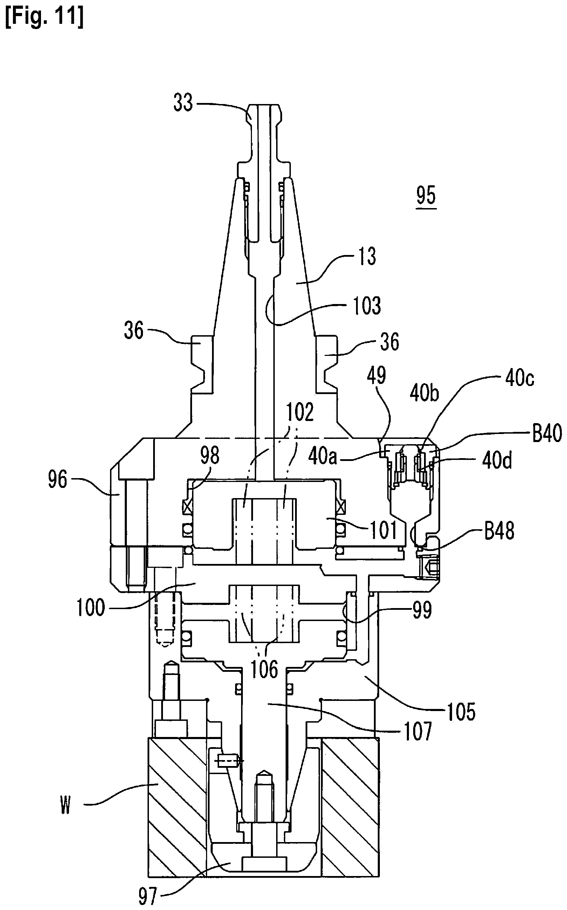

A leg portion of the piston 105 extended downward is formed as a lever 107 and its lower end is joined to a driving mechanism of the collet chuck 97. In a state where the piston 105 has moved to a lowermost position, the collet chuck 97 closes and the workpiece W is not gripped (the state illustrated in FIG. 11).

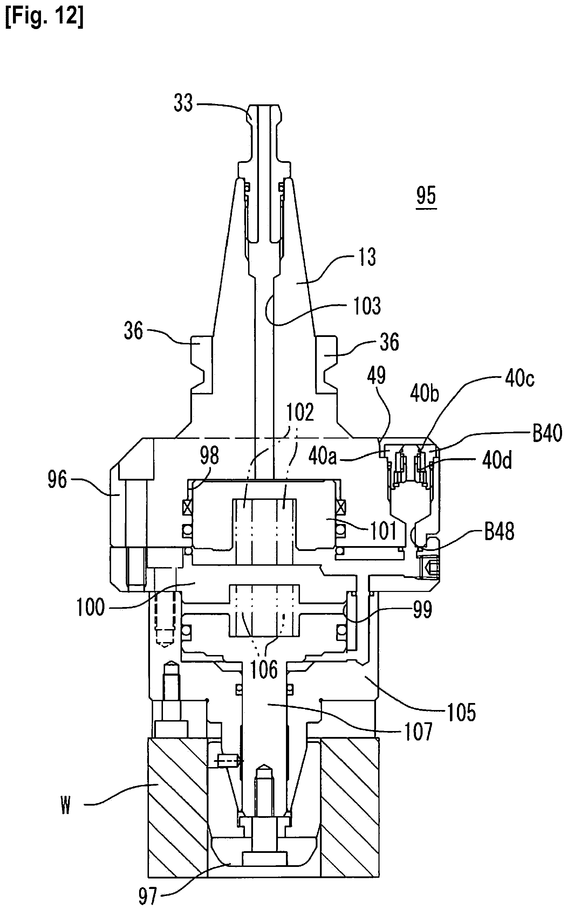

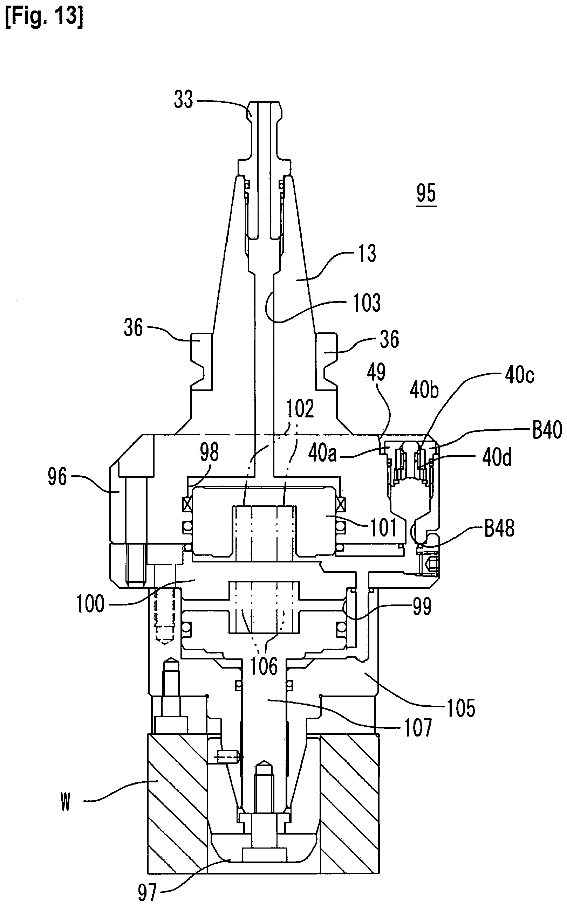

As the piston 105 moves up, the collet chuck 97 is expanded and realizes a gripping state (the state illustrated in FIGS. 12 and 13). As the position of the piston 105 becomes higher, the expanding amount of the collet chuck 97 increases and it more strongly grips the workpiece W. Inside the housings of the cylinders 98 and 99 and inside B48, the hydraulic oil is sealed. Coolant is sealed inside the coolant passage 103.

Next, an operation of the sixth embodiment configured as described above will be described. The operation of the sixth embodiment is also executed by sequence control of a controller not illustrated as in the second embodiment, etc.

The holder 95 of the sixth embodiment is grasped on a main shaft not illustrated, and by connecting the main shaft check valve B39 and the holder check valve B40, the hydraulic oil is supplied into the holder fluid passage B48, and a pressure of the hydraulic oil activates the collet chuck 97.

FIG. 10 illustrates a state where the hydraulic oil has not been supplied into the holder fluid passage B48 (that is, not pressurized) and the piston 105 has not been moved up yet. In this state, the coolant has not been supplied yet to the first cylinder 98, and the piston 101 has not moved down (hereinafter, this state where the piston 101 and the piston 105 are at such positions is referred to as a state P). Even when a pressure not lower than the atmospheric pressure is applied to the piston 101 and the piston 105, the state P is maintained unless the pistons move against biasing forces of the coil springs 102 and 106).

As illustrated in FIG. 11, at this stage, the collet chuck 97 is disposed in a hole of a ring-shaped workpiece W. In this state, a slight gap is left between the workpiece W and the collet chuck 97 and the workpiece W has not been gripped yet.

Next, as the hydraulic oil is supplied into the holder fluid passage B48, a hydraulic pressure inside the holder fluid passage B48 increases, and the piston 105 moves up against the biasing force of the coil spring 106. FIG. 12 illustrates a state where the piston 105 has moved up, the collet chuck 97 has been expanded, and the workpiece W has been gripped. A gripping force is in proportion to upward movement of the piston 105, and an upward movement amount of the piston 105 is in proportion to the hydraulic pressure of the hydraulic oil. The state where the piston 101 and the piston 105 are at such positions is referred to as a state Q. In the state Q, even when the main shaft check valve B39 and the holder check valve B40 are disconnected, the hydraulic oil does not leak from the holder check valve B40, and the gripped state of the workpiece W is maintained. To close the collet chuck 97, the piston 105 is returned to an original position by reverse flow of the hydraulic oil.

Next, a pressure increase will be described.

As the coolant is supplied to the first cylinder 98 from the state Q, a pressure inside the upper housing of the first cylinder 98 increases, and the piston 101 moves down. Accordingly, the pressure of the hydraulic oil sealed inside the holder fluid passage B48 is increased by the piston 101, and this moves the piston 105 up. This state where the piston 101 and the piston 105 are at such positions is referred to as a state R. FIG. 13 illustrates the state R where the piston 101 has moved down from the state Q, and accordingly, the piston 105 has slightly moved up, increasing the expanding force of the collet chuck 97, and the workpiece W is more strongly gripped.

In the state P, as the coolant is supplied to the first cylinder 98, along with a downward movement of the piston 101, the pressure of the hydraulic oil inside the holder fluid passage B48 increases and moves the piston 105 up, and accordingly, the collet chuck 97 can be expanded. This expanded state is not illustrated, however, for example, in FIG. 11, the piston 101 slightly moves down, and the piston 105 slightly moves up. In this case, since there is no pressure generated from the hydraulic oil, no strong force is generated and this is not suitable for machining of a gripped workpiece W, however, for example, this case is particularly suitable for preliminary gripping before machining for positioning of the workpiece W or positional adjustments to change the phase by rotating the workpiece W.

The sixth embodiment brings about the following effects.
(1) Basically, a strong holding force can be provided to the collet chuck 97 by cooperation between the first cylinder 98 and the second cylinder 98, so that a workpiece W can be held by a strong force.
(2) As the main shaft check valve B39 and the holder check valve B40 are connected and a hydraulic pressure is supplied, the collet chuck 97 is activated to grip a workpiece. At this time, the hydraulic oil does not leak from the holder check valve B40 even after the holder check valve B40 is disconnected from the main shaft check valve B39, so that the gripping force of the collet chuck 97 is maintained. By disconnecting the main shaft check valve B39 and the holder check valve B40, the holder 95 in an arbitrary phase state can be attached to the main shaft while the collet chuck 97 is activated. That is, as described in paragraph 0031 of the second embodiment, the workpiece W can be changed in orientation and machined while the workpiece W is held.
   At this time, the hydraulic oil has higher viscosity than coolant, so that the collet chuck 97 can be caused to exert a stronger gripping force than in the case using coolant. Therefore, in lathe turning, displacement of a workpiece or the like and turning resistance can be reduced.
(3) As coolant is supplied from the coolant passage 103, due to its pressurization force, the piston 101 on the first cylinder 98 side moves down, and a pressure inside the holder fluid passage B48 can be increased, and the gripping force of the collet chuck 97 can be additionally improved.
(4) Even in a state where the pressure of the hydraulic oil is not applied (that is, in a non-pressure state or a nearly non-pressure state) or not sufficiently applied from the holder check valve B40 side, and the piston 105 of the second cylinder 99 does not move up, by supplying the coolant from the pull stud 33 side and moving down the piston 101 of the first cylinder 98, the collet chuck 97 can be activated.

### Seventh Embodiment

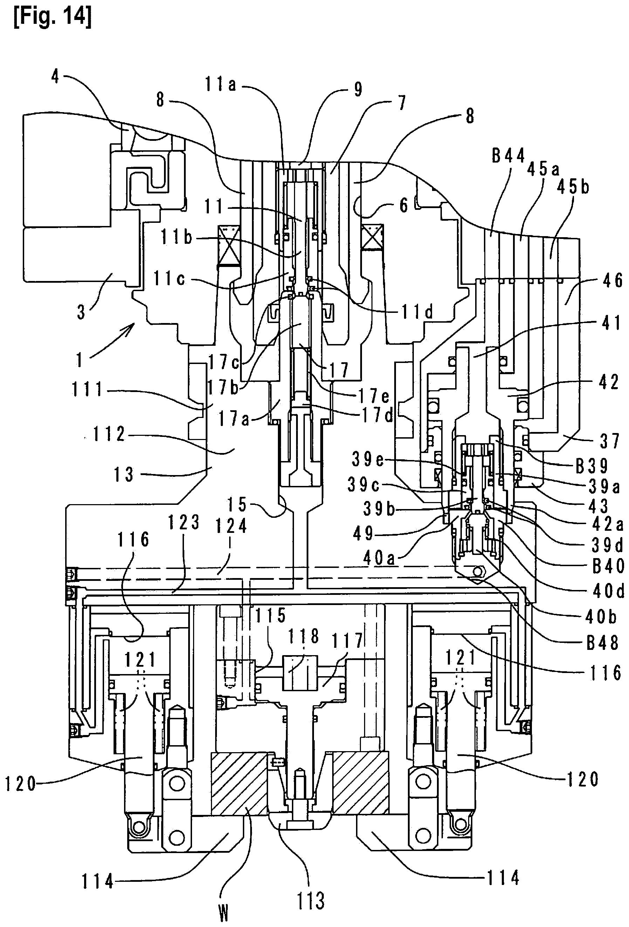

A holder 111 of a seventh embodiment will be described based on FIG. 14.

The holder 111 of the seventh embodiment is a variation of the holder 2 of the first embodiment and the holder 22 of the second embodiment, which has structures of these holders. The holder 111 of the seventh embodiment is an example that has a similar structure on the first hydraulic oil supply unit side to that of the holder 2 of the first embodiment, and has a similar structure on the second hydraulic oil supply unit side to that of the holder 22 of the second embodiment. In the seventh embodiment, a detailed structure and operation of a gripping mechanism of the holder 111 will be described. Hereinafter, a different configuration from the holder 2 of the first embodiment and the holder 22 of the second embodiment will be described in detail, and overlapping detailed description will be omitted by using the same reference signs as those of the holders 2 and 22 in the drawings. FIG. 14 is a sectional view, and hatching is omitted.

The holder 111 includes a holder main body 112. At a lower center position of the holder main body 112, a collet chuck 113 is disposed, and clamp devices 114 are disposed at lower both-side positions of the holder main body 112 so as to sandwich the collet chuck 113. The collet chuck 113 corresponds to a second gripping mechanism, and the clamp devices 114 correspond to a first gripping mechanism.

A first cylinder 115 is disposed at a center position inside the holder main body 112, and second cylinders 116 are disposed at both-side positions of the first cylinder 115. Inside the first cylinder 115, a piston 117 is disposed to be slidable in the up-down direction. A coil spring 118 is disposed between the piston 117 and a ceiling surface of the cylinder 115, and the piston 117 is always biased downward by the coil spring 118. A leg portion of the piston 117 extended downward is formed as a lever 119, and its lower end is joined to a driving mechanism of the collet chuck 113.

Inside the second cylinder 116, a piston 120 is disposed to be slidable in the up-down direction. A coil spring 121 is disposed between the piston 120 and a bottom surface of the cylinder 116, and the piston 120 is always biased upward by the coil spring 121. A leg portion of the piston 120 extended downward is formed as a lever 119 that activates a link mechanism of the clamp device 114, and its lower end is joined to the clamp device 114.

A holder fluid passage 15 is joined to a first hydraulic oil supply passage 123 piped inside the holder main body 112. The first hydraulic oil supply passage 123 is connected to an upper housing of the piston 120 inside the cylinder 116. A holder fluid passage B48 is joined to a second hydraulic oil supply passage 124 piped inside the holder main body 112. The second hydraulic oil supply passage 124 is connected to a lower housing of the piston 117 inside the cylinder 116.

In the seventh embodiment configured as described above, the clamp devices 114 can be activated by supply of the hydraulic oil from the holder fluid passage 15, and the collet chuck 113 can be activated by supply of the hydraulic oil from the holder fluid passage B48. The hydraulic oil has higher viscosity than coolant, so that the collet chuck 113 and the clamp devices 114 can be caused to exert a stronger gripping force than in the case using coolant. Therefore, in lathe turning, displacement of a workpiece or the like and turning resistance can be reduced.

With this configuration, a workpiece W can be gripped at just one side, the inside or the outside, and to firmly grip a workpiece W, the workpiece W can be gripped from both inside and outside. In addition, as the main shaft check valve B39 and the holder check valve B40 are disconnected after the hydraulic oil is supplied from the holder fluid passage B48, the spindle can be rotated while the collet chuck 113 is activated. Then, by reconnecting these valves and decreasing the pressure of the hydraulic oil or reverse flow of the hydraulic oil, the clamp devices 114 can be released. The collet chuck 113 side can also be released by decreasing the pressure of the hydraulic oil or reverse flow of the hydraulic oil in a state where the check valve movement mechanism 11 and the holder check valve 17 are connected. Eighth Embodiment

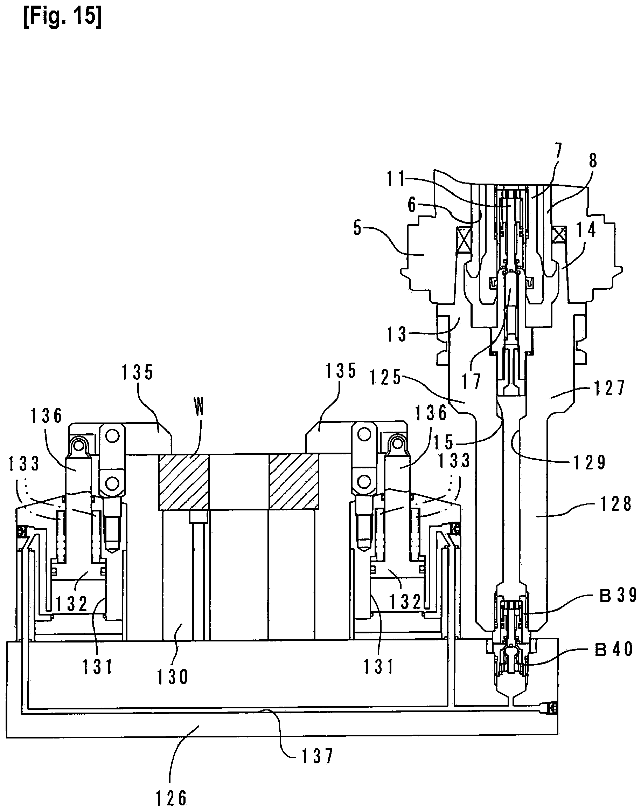

A relay holder 125 of an eighth embodiment will be described based on FIG. 15.

The relay holder 125 of the eighth embodiment is a variation having the structures of the holder 2 of the first embodiment and the holder 22 of the second embodiment. The relay holder 125 of the eighth embodiment is an example that has a similar structure on the first hydraulic oil supply unit side to that of the holder 2 of the first embodiment, and has a similar structure on the second hydraulic oil supply unit side to that of the holder 22 of the second embodiment. The relay holder 125 of the eighth embodiment is a member to operate a gripping mechanism by supplying hydraulic oil of the main shaft side to the gripping mechanism disposed at a position away from the main shaft.

Hereinafter, a different configuration from the holder 2 of the first embodiment and the holder 22 of the second embodiment will be described in detail, and overlapping detailed description will be omitted by using the same reference signs as those of the holders 2 and 22 in the drawings. FIG. 15 is a sectional view, and hatching is omitted.

The relay holder 125 includes a holder main body 127. In the holder main body 127, a long-shaped cylindrical portion 128 is formed. Inside the holder main body 127 and the cylindrical portion 128, a holder fluid passage 129 is formed. At a tip end of the cylindrical portion 128, a main shaft check valve B39 is disposed.

A gripping base 126 is disposed on a table not illustrated positioned away from the spindle 5. In the gripping base 126, the holder fluid passage B48 of the second embodiment is formed, and inside the holder fluid passage B48, a holder check valve B40 is disposed.

The relay holder 125 is fixed at an upper end side by the clamp claws 8 inside the housing 6 on the spindle 5 side, and the main shaft check valve 11 and the holder check valve 17 are 11 connected. At a lower end side of the relay holder 125, the main shaft check valve B39 (the main shaft check valve B39 is disposed in the relay holder 125, but is referred to with the same name as in the second embodiment) is connected to the holder check valve B40 inside the holder fluid passage B48 on the gripping base 126 side.

A workpiece W supported by a support post 130 is disposed at a center position of an upper portion of the gripping base 126. At both-side positions to sandwich the workpiece W, cylinders 131 are disposed. The cylinders 131 of the present eighth embodiment are single-acting cylinders. Inside the cylinder 131, a piston 132 is disposed to be slidable in the up-down direction. A coil spring 133 is disposed between the piston 132 and a bottom surface of the cylinder 131, and the piston 132 is always biased downward by the coil spring 133. A leg portion of the piston 132 extended upward is formed as a lever 136 that activates a link mechanism of a clamp device 135, and its upper end is joined to the clamp device 135.

The holder fluid passage B48 is joined to a hydraulic oil supply passage 137 piped inside the gripping base 126. The hydraulic oil supply passage 137 is connected to lower housings of the cylinders 131 of the clamp devices 132.

In the eighth embodiment configured as described above, by supplying the hydraulic oil from the holder fluid passage 129, the pistons 132 are moved up against the biasing forces of the coil springs 133 to activate the clamp devices 135. Once the clamp devices 131 are activated, the activated state is maintained even when the main shaft check valve B39 is disconnected (even when the relay holder 125 is detached from the gripping base 126), and the hydraulic oil does not leak from the holder check valve B40 and the hydraulic pressure of the supplied hydraulic oil does not attenuate and is maintained, so that the gripping function of the clamp devices 132 is maintained. At this time, the hydraulic oil has higher viscosity than coolant, so that the clamp devices 135 can be caused to exert a stronger gripping force than in the case using coolant. Therefore, in lathe turning, displacement of a workpiece or the like and turning resistance can be reduced.

To release the clamp devices 131, the main shaft check valve B39 and the holder check valve B40 are connected, and the pressure of the hydraulic oil is decreased or, by reverse flow of the hydraulic oil, decreased to a predetermined pressure or lower to return the coil springs 133.

With this configuration, the gripping mechanism at a position away from the main shaft can be activated by using the hydraulic oil of the spindle 5.

### Ninth Embodiment

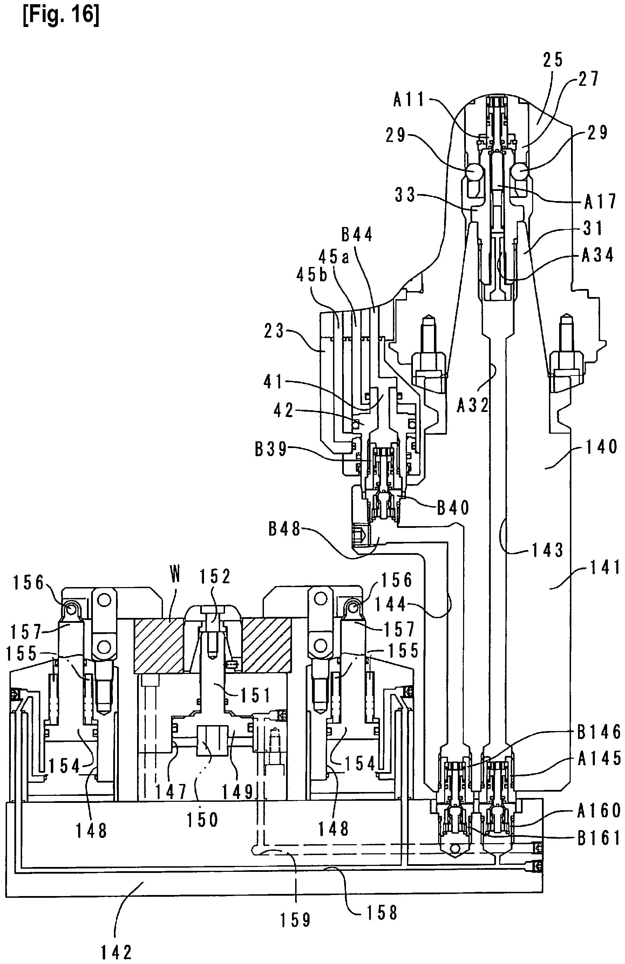

A relay holder 140 of a ninth embodiment will be described based on FIG. 16.

The relay holder 140 of the ninth embodiment is a variation of the eighth embodiment. As a gripping mechanism, it is a variation of the seventh embodiment. The holder 141 of the ninth embodiment is an example that has similar structures on the first and second hydraulic oil supply unit sides to those of the holder 22 of the second embodiment. The relay holder 140 of the ninth embodiment is a member to operate a gripping mechanism by supplying hydraulic oil of the main shaft side to the gripping mechanism disposed at a position away from the main shaft as in the eighth embodiment.

Hereinafter, a different configuration from the holder 22 of the second embodiment will be described in detail, and overlapping detailed description will be omitted by using the same reference signs as those of the holder 22 in the drawings. FIG. 16 is a sectional view, and hatching is omitted.

The relay holder 140 includes a holder main body 141. At a lower end of a first holder flow passage 143 communicated with the holder fluid passage A32 of the first hydraulic oil supply unit side and a lower end of a second holder flow passage 144 communicated with the holder fluid passage B48 of the second hydraulic oil supply unit side (that is, at a lower end of the holder main body 141), a first relay check valve A145 and a second relay check valve B146 are respectively disposed. Configurations and structures of the first and second relay check valves A145 and B146 are the same as those of the main shaft check valve B39, so that their detailed description is omitted. The relay holder 140 is a holder including a multiplex fluid passage including a plurality of flow passages.

A gripping base 147 is disposed at a position that is below the relay holder 140 and offset from the spindle 25. On the gripping base 147, a first cylinder 147 is disposed, and at both-side positions of the first cylinder 147, second cylinders 148 are disposed. The cylinders 147 and 148 of the present ninth embodiment are single-acting cylinders. Inside the first cylinder 147, a piston 149 is disposed to be slidable in the up-down direction. A coil spring 150 is disposed between the piston 149 and a bottom surface of the cylinder 147, and the piston 149 is always biased upward by the coil spring 150. A leg portion of the piston 149 extended upward is formed as a lever 151, and its upper end is joined to a driving mechanism of a collet chuck 152. The collet chuck 152 corresponds to a second gripping mechanism.

Inside the second cylinder 148, a piston 154 is disposed to be slidable in the up-down direction. A coil spring 155 is disposed between the piston 154 and a ceiling surface of the cylinder 148, and the piston 154 is always biased downward by the coil spring 155. A leg portion of the piston 154 extended upward is formed as a lever 157 that activates a link mechanism of a clamp device 156, and its lower end is joined to the clamp device 156. The clamp devices 156 correspond to a first gripping mechanism.

Inside the gripping base 147, a first gripping base fluid passage 158 and a second gripping base fluid passage 159 are disposed. Configurations of first and second relay check valves A158 and B159 are the same as the configuration of the holder check valve B40, so that detailed description thereof is omitted.

In an upper surface of the gripping base 147, at the side of the gripping mechanism such as the collet chuck 152 and the clamp devices 156, openings of the first and second gripping base fluid passages 158 and 159 are formed. At the openings, a third relay check valve A160 and a fourth relay check valve B161 are respectively disposed.

The first gripping base fluid passage 158 is connected to lower housings of the pistons 154 inside the cylinders 148. The second gripping base fluid passage 159 is connected to an upper housing of the piston 151 inside the cylinder 149.

In the ninth embodiment configured as described above, the clamp devices 156 can be activated by supply of the hydraulic oil from the first gripping base fluid passage 158, and the collet chuck 152 can be activated by supply of the hydraulic oil from the second gripping base fluid passage 159.

With this configuration, a workpiece W can be gripped at just one side, the inside or the outside, and to firmly grip a workpiece W, the workpiece W can be gripped from both inside and outside. In addition, the gripped state is maintained even after the relay holder 140 is removed from the gripping base 147. At this time, the hydraulic oil has higher viscosity than coolant, so that the collet chuck 152 and the clamp devices 156 can be caused to exert a stronger gripping force than in the case using coolant. Therefore, in lathe turning, displacement of a workpiece or the like and turning resistance can be reduced.

To release the clamp devices 156, the first relay check valve A145 and the third relay check valve A160 are connected, and the pressure of the hydraulic oil is decreased or, by reverse flow of the hydraulic oil, decreased to a predetermined pressure or lower to return the coil springs 155. To release the collet chuck 152, the second relay check valve B146 and the fourth relay check valve B161 are connected, and the pressure of the hydraulic oil is decreased or, by reverse flow of the hydraulic oil, decreased to a predetermined pressure or lower to return the coil spring 150.

The above-described embodiments are merely described as detailed embodiments for illustrating the principles and concepts of the present invention. That is, the present invention is not limited to the embodiments described above. The present invention can be embodied as an embodiment modified, for example, as follows. The following are examples of variations.
- For example, as a check valve, a configuration other than the check valves 11, 17, 39, and 40 described above may be used. For example, the holder and spindle, etc., may also be realized in forms other than those described above . A mechanism that causes the holder to be grasped on the spindle may also be realized as a mechanism other than those described above. For example, a to-be-grasped member other than a pull stud may be used. For example, a grasping member other than a drawbar may be used. The shank shape of the holder may also be freely modified, and for example, the HSK type of the first embodiment may be applied to the second and third embodiments, etc., and vice versa.
- A gripping mechanism other than the above-described gripping mechanisms may be used, and a gripping mechanism illustrated in the embodiment described above may be applied to another embodiment.
- For example, in the holder 85 of the fifth embodiment, the holder check valve A17 is attached to the first hydraulic oil supply unit, however, a configuration is also possible in which the holder check valve A17 is omitted and just a passage for supplying coolant as in the sixth embodiment is provided.
- For example, the holder 95 of the sixth embodiment is illustrated as the configuration in which the first hydraulic oil supply unit side includes no check valve, however, the first hydraulic oil supply unit side may be provided with a check valve.
- The configurations and dispositions of two cylinder devices (cylinders 98, 99 and pistons 101, 105, etc.) in the sixth embodiment are just examples. For example, the cylinders 98 and 99 may be disposed left and right instead of being overlapped one above the other. For example, the advancing and retreating directions of the pistons 101 and 105 may be changed. For example, the gripping mechanism may be changed into a different type.
- The collet chuck 113 and the clamp devices 114 configured to be respectively supplied with the hydraulic oil from the first hydraulic oil supply unit and the second hydraulic oil supply unit in the sixth embodiment, may be reversed.
- In the eighth embodiment, the hydraulic oil is supplied to the gripping base 126 by the holder check valve 11 at the tip end of the shaft 13 to be attached to the inside of the housing 6 of the holder 5, however, for example, the holder 22 of the second embodiment may be used, and in this case, the hydraulic oil can be supplied from either of the holder check valve A11 and the holder check valve B39.
- It is also possible that one holder check valve A17 (B40) of the relay holder 140 of the ninth embodiment is omitted, and coolant is supplied from a flow passage in which the holder check valve is omitted.

The present invention is not limited to the configurations described in the embodiments described above. Components of the above-described embodiments and modifications may be arbitrarily selected and combined to make a configuration. Arbitrary components of the embodiments and modifications and arbitrary components described in "Solution to Problem" or components embodying arbitrary components described in "Solution to Problem" may be arbitrarily combined to make a configuration. The applicant also has an intention to acquire rights to these in the amendment or divisional application, etc., of the present application.

In addition, the applicant has an intention to acquire rights for the whole design or a partial design by applying for a change to a design application. Although the drawings illustrate the whole of the apparatus of the present invention with solid lines, the drawings include not only the whole design but also a partial design claimed for a part of the apparatus. For example, the drawings include not only a part of members of the apparatus as a partial design, but also a part of the apparatus as a partial design regardless of the members. A part of the apparatus may be a part of the members of the apparatus or a part of the member.

### Industrial Applicability

The present invention is used in industries for manufacturing and selling holders, etc., of machine tools and tools, etc., and industries for machining workpieces.

### Reference Signs List

1, 21, 51: main shaft, 5, 25, 55: spindle, 2, 22, 52, 75, 85, 95, 111, 125, 140: holder, 9: main shaft fluid passage, 15: holder fluid passage, 30, 60: main shaft fluid passage A, 32, 62: holder fluid passage A, 44, 48: main shaft fluid passage B, 48, 71: holder fluid passage B, 11: main shaft check valve, 11: main shaft check valve A, 17: holder check valve, 17: holder check valve A, 39: main shaft check valve B, 40: holder check valve B, 11c: sleeve as valve element, 17b, 39b, 40b: rod as valve element

## Claims

1. A main-shaft and holder combination, wherein
in a combination with a holder to be detachably joined to a spindle that is disposed on a main shaft of a machine tool and rotates with respect to the main shaft,
a joining end portion of the holder is tapered to narrow toward a tip end so as to be joined to a fitting recess portion of the spindle that has an inner surface tapered to become wider toward a tip end,
hydraulic oil is made to flow between a main shaft fluid passage (hereinafter, referred to as a main shaft fluid passage A) provided inside a pushing and pulling rod disposed coaxially with the spindle inside the spindle, and a holder fluid passage (hereinafter referred to as a holder fluid passage A) that is provided in the holder and capable of being communicated with the main shaft fluid passage A,
a main shaft check valve (hereinafter, referred to as a main shaft check valve A) is provided in the main shaft fluid passage A, a holder check valve (hereinafter, referred to as a holder check valve A) is provided in the holder fluid passage A, and in a state where the holder is attached to the main shaft, a valve element of the main shaft check valve A and a valve element of the holder check valve A disposed to face each other are moved in directions away from each other along with the attachment of the holder, and along with the movements of the valve elements, the main shaft check valve A and the holder check valve A are opened to flow the hydraulic oil.

2. A main-shaft and holder combination, wherein
in a combination with a holder to be detachably joined to a spindle that is disposed on a main shaft of a machine tool and rotates with respect to the main shaft,
a main shaft fluid passage (hereinafter, referred to as a main shaft fluid passage B) is provided at an arbitrary position not on the spindle of the main shaft, a holder fluid passage (hereinafter, referred to as a holder fluid passage B) to be communicated with the main shaft fluid passage B is provided on the holder side, hydraulic oil is made to flow between the main shaft fluid passage B and the holder fluid passage B,
a main shaft check valve (hereinafter, referred to as a main shaft check valve B) is provided in the main shaft fluid passage B, a holder check valve (hereinafter, referred to as a holder check valve B) is provided in the holder fluid passage B, and in a state where the holder is attached to the main shaft, a valve element of the main shaft check valve B and a valve element of the holder check valve B disposed to face each other are moved in directions away from each other along with the attachment of the holder, and along with the movements of the valve elements, the main shaft check valve B and the holder check valve B are opened to flow the hydraulic oil.

3. The main-shaft and holder combination according to Claim 1, wherein when the holder is detached from the main shaft, the valve element of the main shaft check valve A and the valve element of the holder check valve A are moved to approach each other, and along with the movements of the valve elements, the main shaft check valve A and the holder check valve A are closed so that the hydraulic oil does not leak.

4. The main-shaft and holder combination according to Claim 2, wherein when the holder is detached from the main shaft, the valve element of the main shaft check valve B and the valve element of the holder check valve B are moved to approach each other, and along with the movements of the valve elements, the main shaft check valve B and the holder check valve B are closed so that the hydraulic oil does not leak.

5. A main-shaft and holder combination, wherein
in a combination with a holder to be detachably joined to a spindle that is disposed on a main shaft of a machine tool and rotates with respect to the main shaft,
hydraulic oil is made to flow between a main shaft fluid passage (hereinafter, referred to as a main shaft fluid passage A) provided in the spindle of the main shaft and a holder fluid passage (hereinafter, referred to as a holder fluid passage A) that is provided in the holder and capable of being communicated with the main shaft fluid passage A,
a main shaft fluid passage (hereinafter, referred to as a main shaft fluid passage B) is provided at an arbitrary position not on the spindle of the main shaft, a holder fluid passage (hereinafter, referred to as a holder fluid passage B) to be communicated with the main shaft fluid passage B is provided on the holder side, hydraulic oil is made to flow between the main shaft fluid passage B and the holder fluid passage B,
a main shaft check valve (hereinafter, referred to as a main shaft check valve B) is provided in the main shaft fluid passage B, a holder check valve (hereinafter, referred to as a holder check valve B) is provided in the holder fluid passage B, and in a state where the holder is attached to the main shaft, a valve element of the main shaft check valve B and a valve element of the holder check valve B disposed to face each other are moved in directions away from each other along with the attachment of the holder, and along with the movements of the valve elements, the main shaft check valve B and the holder check valve B are opened to flow the hydraulic oil.

6. The main-shaft and holder combination according to Claim 5, wherein a main shaft check valve (hereinafter, referred to as a main shaft check valve A) is provided in the main shaft fluid passage A, and a holder check valve A (hereinafter, referred to as a holder check valve A) is provided in the holder fluid passage A.

7. The main-shaft and holder combination according to Claim 6, wherein when the holder is detached from the main shaft, a valve element of the main shaft check valve A and a valve element of the holder check valve A are moved to approach each other, and along with the movements of the valve elements, the main shaft check valve A and the holder check valve A are closed so that the hydraulic oil does not leak.

8. The main-shaft and holder combination according to any one of Claims 5 to 7, wherein when the holder is detached from the main shaft, a valve element of the main shaft check valve B and a valve element of the holder check valve B are moved to approach each other, and along with the movements of the valve elements, the main shaft check valve B and the holder check valve B are closed so that the hydraulic oil does not leak.

9. The main-shaft and holder combination according to any one of Claims 2 and 4 to 8, wherein in a state where the holder is attached to the main shaft, the main shaft check valve B is connected to the holder check valve B by advancing to the holder fluid passage B side, and is disconnected from the holder check valve B by retreating and allows the spindle to rotate.

10. The main-shaft and holder combination according to Claim 9, wherein one or a plurality of positioning recess portions are formed on the holder at positions on a circle concentric with an opening of the holder fluid passage B, and along with rotation of the holder with respect to the main shaft, the main shaft check valve B advances at a position corresponding to the positioning recess portion and engages with the positioning recess portion to position the holder in the rotation direction.

11. The main-shaft and holder combination according to any one of Claims 2 and 4 to 10, wherein around the main shaft check valve B, an insertion portion having a tapered surface tapered to narrow toward a tip end is formed, and on an opening at the holder fluid passage B side into which the insertion portion is inserted, a corresponding tapered surface that expands toward a tip end is formed.

12. A holder to be used in the main-shaft and holder combination according to Claim 1 or 3, the holder comprising: a holder fluid passage A and a holder check valve A in a mechanism to be grasped by the spindle, wherein
in a state where the holder is attached to the spindle side, a valve element of the holder check valve A retreats by being pushed by the main shaft check valve A, hydraulic oil is allowed to flow into the holder from the spindle side through the main shaft check valve A, and by detaching the holder from the spindle, the valve element returns so that the hydraulic oil does not leak.

13. A holder to be used in the main-shaft and holder combination according to Claim 2 or 4, the holder comprising: a holder check valve B in the holder fluid passage B in which the main shaft check valve B is inserted, wherein
in a state where the holder is attached to the spindle side, a valve element of the holder check valve B retreats by being pushed by the main shaft check valve B, hydraulic oil is allowed to flow into the holder from the main shaft side through the main shaft check valve B, and by detaching the holder from the spindle, the valve element returns so that the hydraulic oil does not leak.

14. A holder to be used in the main-shaft and holder combination according to any one of Claims 5 to 10, the holder comprising: a holder fluid passage A inside a mechanism to be grasped by the spindle; and a holder check valve B in a holder fluid passage B in which the main shaft check valve B is inserted, wherein
a valve element of the holder check valve B retreats by being pushed by the main shaft check valve B, hydraulic oil is allowed to flow into the holder from the main shaft side through the main shaft check valve B, and by detaching the holder from the spindle, the valve element returns so that the hydraulic oil does not leak.

15. A holder to be used in the main-shaft and holder combination according to any one of Claims 5 to 10, the holder comprising: a holder fluid passage A and a holder check valve A in a mechanism to be grasped by the spindle; and a holder check valve B in a holder fluid passage B in which the main shaft check valve B is inserted, wherein
in a state where the holder is attached to the spindle side, a valve element of the holder check valve A retreats by being pushed by the main shaft check valve A, hydraulic oil is allowed to flow into the holder from the spindle side through the main shaft check valve A, a valve element of the holder check valve B retreats by being pushed by the main shaft check valve B, the hydraulic oil is allowed to flow into the holder from the main shaft side through the main shaft check valve B, and by detaching the holder from the spindle, the valve elements return so that the hydraulic oil does not leak.

16. The holder according to any one of Claims 11 to 15, comprising: a gripping mechanism for holding a tool or a workpiece (hereinafter, simply referred to as "a workpiece or the like"); and a cylinder device that drives the gripping mechanism, wherein by feeding hydraulic oil to the cylinder device through the holder fluid passage A or the holder fluid passage B, the cylinder device is operated to drive the gripping mechanism.

17. The holder according to any one of Claims 11 to 15, comprising: a gripping mechanism for holding a tool or a workpiece (hereinafter, simply referred to as "a workpiece or the like"); and a cylinder device that drives the gripping mechanism, wherein the cylinder device feeds hydraulic oil to both sides of a piston inside the cylinder device through the holder fluid passage A and the holder fluid passage B, respectively, and accordingly reciprocates the piston, and reciprocates the gripping mechanism by the piston.

18. The holder according to Claim 13, comprising: a gripping mechanism for holding a tool or a workpiece (hereinafter, simply referred to as "a workpiece or the like"); and a first cylinder device and a second cylinder device that drive the gripping mechanism, wherein coolant is fed to the first cylinder device through the holder fluid passage A, and hydraulic oil is fed to the second cylinder device through the holder fluid passage B, respectively, and the gripping mechanism is driven by cooperation between a pressure generated in the first cylinder device by the supply of the coolant and a pressure generated in the second cylinder device by the supply of the hydraulic oil.

19. The holder for a workpiece or the like, according to Claim 13 or 14, comprising: a first gripping mechanism and a second gripping mechanism for holding a tool or a workpiece (hereinafter, simply referred to as "a workpiece or the like") ; a first cylinder device that drives the first gripping mechanism; and a second cylinder device that drives the second gripping mechanism, wherein hydraulic oil is fed to the first cylinder device through the holder fluid passage A, and fed to the second cylinder device through the holder fluid passage B, respectively, and a workpiece or the like is held by the first gripping mechanism and the second gripping mechanism.

20. The holder for a workpiece or the like according to Claim 13, comprising: a gripping mechanism for holding a tool or a workpiece (hereinafter, simply referred to as "a workpiece or the like"); a holder fluid passage that is communicated with the main shaft fluid passage of the spindle side and is supplied with coolant from the spindle side in a state where the holder is attached to the spindle side; a first cylinder device communicated with the holder fluid passage; and a second cylinder device communicated with the holder fluid passage B, wherein
a pressure is transmitted by hydraulic oil to the first cylinder device and the second cylinder device,
the first cylinder device is driven by coolant supplied through the holder fluid passage, and a pressure generated by driving of the first cylinder device increases a pressure of the hydraulic oil in the second cylinder device to increase a force to hold a workpiece or the like by the gripping mechanism.

21. The holder according to Claim 12, wherein by providing the holder fluid passage A so as to penetrate through the holder, a holder penetrating passage (hereinafter, referred to as a holder penetrating passage A) is formed, and a supply check valve (hereinafter, referred to as a supply check valve A) for supplying hydraulic oil is provided at a downstream-side end portion of the holder penetrating passage A.

22. The holder according to Claim 13, wherein by providing the holder fluid passage B so as to penetrate through the holder, a holder penetrating passage (hereinafter, referred to as a holder penetrating passage B) is formed, and a supply check valve (hereinafter, referred to as a supply check valve B) for supplying hydraulic oil is provided at a downstream-side end portion of the holder penetrating passage B.

23. The holder according to Claim 14, wherein by providing the holder fluid passage A and the holder fluid passage B so as to penetrate through the holder, first and second penetrating passages (hereinafter, referred to as a holder penetrating passage A and a holder penetrating passage B) are formed, and supply check valves (hereinafter, referred to as a supply check valve A and a supply check valve B) for supplying hydraulic oil are provided at downstream-side end portions of the first and second penetrating passages A and B.

24. A machine tool comprising a combination of a main shaft, the holder according to Claim 21, and a gripping base, wherein
hydraulic oil is made to flow between a main shaft fluid passage A provided in the main shaft and a holder penetrating passage A provided in the fluid passage holder, the gripping base includes a gripping mechanism for holding a workpiece or the like, a cylinder that drives the gripping mechanism, and an internal passage communicated with the cylinder, and a receiving check valve is provided at an upstream-side end portion of the internal passage, and
when a supply check valve A of the holder is joined to the receiving check valve, the supply check valve A is connected to the receiving check valve so as to feed hydraulic oil to the cylinder, and when the supply check valve A of the fluid passage holder is removed from the receiving check valve, the supply check valve A is disconnected from the receiving check valve so that the hydraulic oil does not leak.

25. A machine tool comprising a combination of a main shaft, the holder according to Claim 22, and a gripping base, wherein
hydraulic oil is made to flow between a main shaft fluid passage B provided in the main shaft and holder penetrating passages B provided in the fluid passage holder, the gripping base includes a gripping mechanism for holding a workpiece or the like, a cylinder that drives the gripping mechanism, and an internal passage communicated with the cylinder, and a receiving check valve is provided at an upstream-side end portion of the internal passage, and
when a supply check valve B of the holder is joined to the receiving check valve, the supply check valve B is connected to the receiving check valve so as to feed hydraulic oil to the cylinder, and when the supply check valve B of the fluid passage holder is removed from the receiving check valve, the supply check valve B is disconnected from the receiving check valve so that the hydraulic oil does not leak.

26. A machine tool comprising a combination of a main shaft, the holder according to Claim 23, and a gripping base, wherein
hydraulic oil is made to flow between main shaft fluid passages A, B provided in the main shaft and holder penetrating passages A, B provided in the fluid passage holder, the gripping base includes a first gripping mechanism for holding a workpiece or the like, a first cylinder that drives the first gripping mechanism, a second gripping mechanism for holding a workpiece or the like, a second cylinder that drives the second gripping mechanism, and internal passages communicated with the first and second cylinders, and receiving check valves are respectively provided at upstream-side end portions of the internal passages, and
when the supply check valves A and B of the holder are joined to the receiving check valves, the supply check valves A and B are connected to the receiving check valves so as to feed the hydraulic oil to the first and second cylinders, and when the supply check valves A and B of the fluid passage holder are removed from the receiving check valves, the supply check valve A or B and the receiving check valves are disconnected from each other so as to prevent leakage of the hydraulic oil.
